(19)

**Europäisches Patentamt**
**European Patent Office**
**Office européen des brevets**

(11) **EP 4 441 941 B1**

(12) **EUROPEAN PATENT SPECIFICATION**

(45) Date of publication and mention
of the grant of the patent:
**15.10.2025   Bulletin 2025/42**

(51) International Patent Classification (IPC):
*H04L 1/1607* (2023.01)    *H04L 1/1829* (2023.01)
*H04L 1/1822* (2023.01)    *H04L 1/1867* (2023.01)
*H04L 5/00* (2006.01)    *H04W 74/00* (2009.01)

(21) Application number: **22917962.7**

(22) Date of filing: **14.01.2022**

(52) Cooperative Patent Classification (CPC):
**H04L 1/1854; H04L 1/1614; H04L 1/1664;**
**H04L 1/1671; H04L 1/189;** H04L 1/1822;
H04L 1/1896; H04L 5/0055; H04W 72/21

(86) International application number:
**PCT/CN2022/071948**

(87) International publication number:
**WO 2023/130493 (13.07.2023 Gazette 2023/28)**

(54) **SUPPORT FOR HARQ FEEDBACK ENHANCEMENTS**

UNTERSTÜTZUNG FÜR HARQ-RÜCKKOPPLUNGSVERBESSERUNGEN

SUPPORT POUR AMÉLIORATIONS DE RÉTROACTION HARQ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **07.01.2022   PCT/CN2022/070816**

(43) Date of publication of application:
**09.10.2024   Bulletin 2024/41**

(73) Proprietor: **Apple Inc.**
**Cupertino CA 95014 (US)**

(72) Inventors:
• **YANG, Weidong**
  **San Diego, California 92131 (US)**
• **YAO, Chunhai**
  **Beijing 100022 (CN)**
• **YE, Chunxuan**
  **San Diego, California 92131 (US)**
• **ZHANG, Dawei**
  **Cupertino, California 95014 (US)**
• **SUN, Haitong**
  **Cupertino, California 95014 (US)**
• **HE, Hong**
  **Cupertino, California 95014 (US)**
• **NIU, Huaning**
  **Cupertino, California 95014 (US)**

• **OTERI, Oghenekome**
  **San Diego, California 92131 (US)**
• **FAKOORIAN, Seyed Ali Akbar**
  **San Diego, California 92131 (US)**
• **YE, Sigen**
  **San Diego, California 92131 (US)**
• **ZENG, Wei**
  **Cupertino, California 95014 (US)**

(74) Representative: **Simmons & Simmons**
**City Point**
**One Ropemaker Street**
**London EC2Y 9SS (GB)**

(56) References cited:
**WO-A1-2020/225198     WO-A1-2020/243505**
**WO-A1-2021/031995**

• **APPLE INC: "Views on Intra-UE Multiplexing/**
  **Prioritization", vol. RAN WG1, no. e-Meeting;**
  **20210412 - 20210420, 7 April 2021 (2021-04-07),**
  **XP052177907, Retrieved from the Internet**
  **<URL:https://ftp.3gpp.org/tsg_ran/WG1_RL1/**
  **TSGR1_104b-e/Docs/R1-2103106.zip R1-2103106**
  **Rel-17 URLLC UCI multiplexing v5.docx>**
  **[retrieved on 20210407]**

**(Cont. next page)**

• QUALCOMM INCORPORATED: "HARQ-ACK enhancement for IOT and URLLC", vol. RAN WG1, no. e-Meeting; 20211011 - 20211019, 2 October 2021 (2021-10-02), XP052059114, Retrieved from the Internet <URL:https://ftp.3gpp.org/tsg_ran/WG1_RL1/TSGR1_106b-e/Docs/R1-2110178.zip R1-2110178 HARQ-ACK enhancement for IOT and URLLC.docx> [retrieved on 20211002]

• APPLE INC.: "Views on Intra-UE Multiplexing/Prioritization", 3GPP TSG- RAN WG1 MEETING #104B-E, R1-2103106, 7 April 2021 (2021-04-07), XP052177907

**Description**

<u>**Technical Field**</u>

The present disclosure generally relates to communication, and in particular, to support for HARQ feedback enhancements.

<u>**Background**</u>

A user equipment (UE) may connect to a base station of a fifth generation (5G) new radio (NR) network. When connected, the UE may transmit uplink control information (UCI) to the base station on a physical uplink control channel (PUCCH) or a physical uplink shared channel (PUSCH). The UCI may encompass a variety of different types of control information such as, but not limited to, hybrid automatic repeat request (HARQ) feedback and channel state information (CSI) feedback.

3GPP document R1-2103106 discloses views on UCI multiplexing design from HARQ/CSI enhancements.

3GPP document R1-2110178 discloses enhancements of HARQ-ACK processes for IOT and URLLC.

<u>**Summary**</u>

The invention is defined by the independent claim. A selection of optional features of the invention is set out in the dependent claims.

<u>**Brief Description of the Drawings**</u>

Fig. 1 shows an exemplary network arrangement according to various exemplary embodiments.

Fig. 2 shows an exemplary user equipment (UE) according to various exemplary embodiments.

Fig. 3 shows an exemplary base station according to various exemplary embodiments.

Fig. 4 shows an example of semi-persistent scheduling (SPS) hybrid automatic repeat request (HARQ) deferral according to various exemplary embodiments.

Fig. 5 shows an example of physical uplink control channel (PUCCH) carrier switching according to various exemplary embodiments.

Fig. 6 shows a method for joint operation of SPS HARQ deferral and PUCCH carrier switching according to various exemplary embodiments.

Fig. 7 shows two example scenarios where dynamically indicated component carrier (CC) is an alternative CC according to various exemplary embodiments.

Fig. 8 shows an exemplary mapping between different types of uplink control information (UCI) and UCI parts according to various exemplary embodiments.

Fig. 9 shows an example mapping between a priority reporting level and a channel state information (CSI) group according to various exemplary embodiments.

Fig. 10 shows a table comparing the signaling overhead for the CSI payload size indication in accordance with various exemplary embodiments.

<u>**Detailed Description**</u>

The exemplary embodiments may be further understood with reference to the following description and the related appended drawings, wherein like elements are provided with the same reference numerals. The exemplary embodiments introduce techniques for implementing release 17 (Rel-17) hybrid automatic repeat request (HARQ) feedback enhancements. In one aspect, the exemplary embodiments relate to enabling the joint operation of HARQ deferral and dynamic physical uplink control channel (PUCCH) carrier switching. In another aspect, the exemplary embodiments relate to multiplexing uplink control information (UCI) over a physical uplink shared channel (PUSCH) or a physical uplink control channel (PUCCH). Each of these exemplary aspects will be described in detail below.

The exemplary embodiments are described with regard to a user equipment (UE). However, reference to a UE is merely provided for illustrative purposes. The exemplary embodiments may be utilized with any electronic component that is configured with the hardware, software, and/or firmware to exchange information (e.g., control information) and/or data with the network. Therefore, the UE as described herein is used to represent any suitable electronic device.

The exemplary embodiments are also described with regard to HARQ processes. A "HARQ process" generally refers to a signaling exchange in which a transmitting device transmits information and/or data to a receiving device. In response, the receiving device sends feedback to the transmitting device. The feedback may indicate whether the information and/or data is received correctly or whether transmitting device is to perform a retransmission of the information and/or data.

To provide an example, consider a scenario in which the UE is the receiving device and a base station is the transmitting device. Initially, the network configures a component carrier (CC) that includes one or more HARQ processes. The base station may transmit a downlink signal to the UE via the CC. The UE processes the signal and generates HARQ feedback. In this example, the HARQ feedback may include an acknowledgement (ACK) indicating successful reception by the UE or a negative acknowledgement (NACK) indicating unsuccessful reception by the UE. The UE may then transmit an uplink signal to the base station comprising the HARQ feedback.

In one aspect, the exemplary embodiments relate to enabling the joint operation of two different Rel-17 HARQ-ACK feedback enhancements. Throughout this description, these mechanisms may be referred to as "HARQ deferral" or "semi-persistent scheduling (SPS) HARQ deferral" and "dynamic PUCCH carrier switching" or "dynamic PUCCH cell switching." Generally, HARQ deferral refers to a mechanism where the configured transmission of HARQ feedback is deferred to a subsequent slot in response to identifying a collision in time between the HARQ feedback and another uplink/downlink signal at the UE. Generally, dynamic PUCCH carrier switching refers to a mechanism where the transmission of HARQ feedback on the PUCCH switches between CCs. However, reference to the terms "HARQ deferral" and "dynamic PUCCH carrier switching" are merely provided for illustrative purposes. Different entities may refer to similar concepts by a different name.

As will be described in more detail below, the exemplary embodiments include techniques for enabling the joint operation of HARQ deferral and dynamic PUCCH carrier switching. When HARQ deferral and dynamic PUCCH carrier switching are simultaneously configured at the UE, an initially configured slot and a target slot for deferred HARQ feedback may be on different CCs. The exemplary techniques for enabling joint operation of these HARQ feedback enhancements may be used in conjunction with currently implemented HARQ feedback mechanisms, future implementations of HARQ feedback mechanisms or independently from other HARQ feedback mechanisms.

In another aspect, the exemplary embodiments include techniques for multiplexing UCI over PUSCH and techniques for multiplexing UCI over PUCCH. Those skilled in the art will understand that the term "UCI" may encompass various different types of control information. For example, the contents of UCI may include, but is not limited to, HARQ feedback (e.g., ACK, NACK, low priority (LP) HARQ feedback, high priority (HP) HARQ feedback, etc.), scheduling requests (SRs), channel state information (CSI) (e.g., CSI part I, CSI part II, HP CSI, LP CSI, etc.) or a combination thereof. As will be described in more detail below, the exemplary embodiments introduce techniques for multiplexing UCI over PUSCH and techniques for multiplexing UCI over PUCCH. The exemplary techniques for multiplexing UCI may be used in conjunction with currently implemented UCI multiplexing mechanisms, future implementations of UCI multiplexing mechanisms or independently from other UCI multiplexing mechanisms.

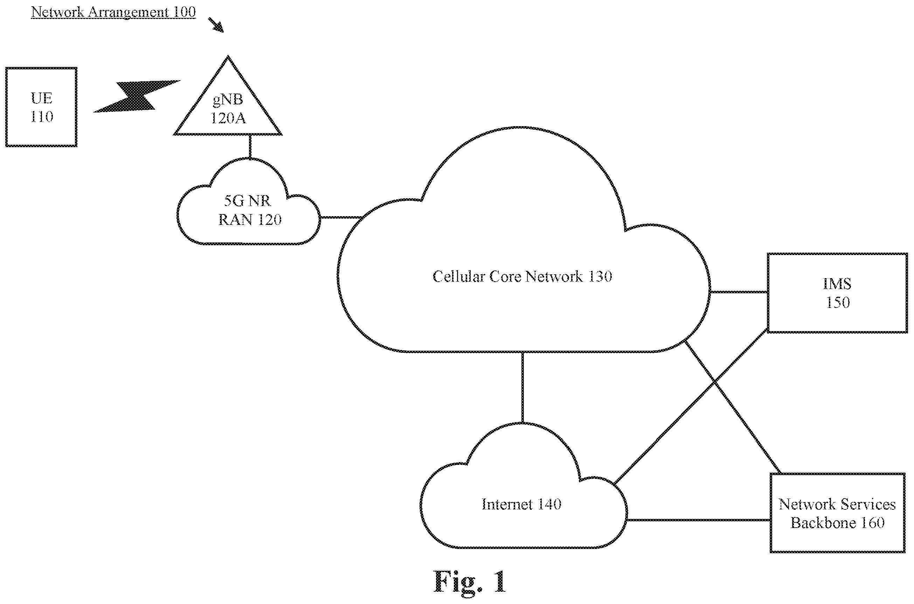

Fig. 1 shows an exemplary network arrangement 100 according to various exemplary embodiments. The exemplary network arrangement 100 includes a UE 110. Those skilled in the art will understand that the UE 110 may be any type of electronic component that is configured to communicate via a network, e.g., mobile phones, tablet computers, desktop computers, smartphones, phablets, embedded devices, wearables, Internet of Things (IoT) devices, etc. It should also be understood that an actual network arrangement may include any number of UEs being used by any number of users. Thus, the example of a single UE 110 is merely provided for illustrative purposes.

The UE 110 may be configured to communicate with one or more networks. In the example of the network configuration 100, the network with which the UE 110 may wirelessly communicate is a 5G NR radio access network (RAN) 120. However, the UE 110 may also communicate with other types of networks (e.g., 5G cloud RAN, a next generation RAN (NG-RAN), a long term evolution (LTE) RAN, a legacy cellular network, a wireless local area network (WLAN), etc.) and the UE 110 may also communicate with networks over a wired connection. With regard to the exemplary embodiments, the UE 110 may establish a connection with the 5G NR RAN 120. Therefore, the UE 110 may have a 5G NR chipset to communicate with the NR RAN 120.

The 5G NR RAN 120 may be a portion of a cellular network that may be deployed by a network carrier (e.g., Verizon, AT&T, T-Mobile, etc.). The 5G NR RAN 120 may include, for example, base stations or nodes (eNodeBs, gNBs, gNodeBs, small cells, transmission reception points (TRPs), etc.) that are configured to send and receive traffic from UEs that are equipped with the appropriate cellular chip set.

Those skilled in the art will understand that any association procedure may be performed for the UE 110 to connect to the 5G NR RAN 120. For example, as discussed above, the 5G NR RAN 120 may be associated with a particular cellular provider where the UE 110 and/or the user thereof has a contract and credential information (e.g., stored on a SIM card). Upon detecting the presence of the 5G NR RAN 120, the UE 110 may transmit the corresponding credential information to associate with the 5G NR RAN 120. More specifically, the UE 110 may associate with a specific base station (e.g., the gNB 120A).

The network arrangement 100 also includes a cellular core network 130, the Internet 140, an IP Multimedia Subsystem (IMS) 150, and a network services backbone 160. The cellular core network 130 may refer an interconnected set of components that manages the operation and traffic of the cellular network. It may include the evolved packet core (EPC) and/or the 5G core (5GC). The cellular core network 130 also manages the traffic that flows between the cellular network and the Internet 140. The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

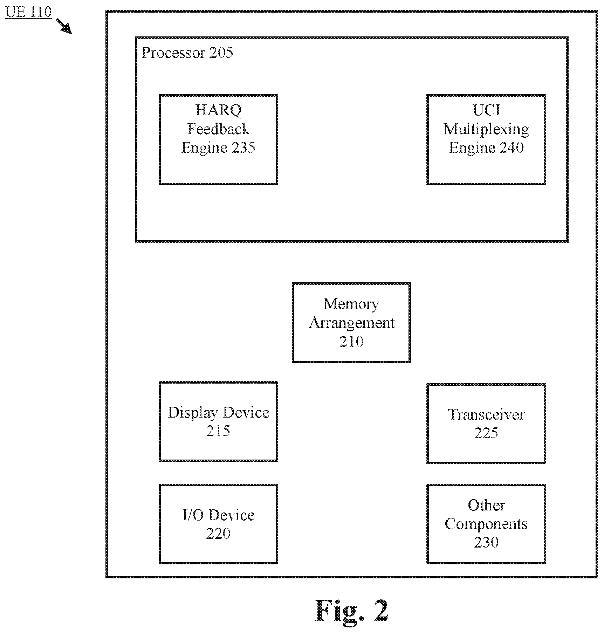

Fig. 2 shows an exemplary UE 110 according to various exemplary embodiments. The UE 110 will be described with regard to the network arrangement 100 of Fig. 1. The UE 110 may include a processor 205, a memory arrangement 210, a display device 215, an input/output (I/O) device 220, a transceiver 225 and other components 230. The other components 230 may include, for example, an audio input device, an audio output device, a power supply, a data acquisition device, ports to electrically connect the UE 110 to other electronic devices, etc.

The processor 205 may be configured to execute a plurality of engines of the UE 110. For example, the engines may include a HARQ feedback engine 235 and a UCI multiplexing engine 240. The HARQ feedback engine 235 may be configured to perform various operations related to generating and transmitting HARQ feedback. These operations may include the exemplary techniques described herein related to enabling the joint operation of HARQ deferral and dynamic PUCCH carrier switching. The UCI multiplexing engine 240 may be configured to perform various operations related to multiplexing UCI with different priorities over PUSCH.

The above referenced engines 235, 240 being an application (e.g., a program) executed by the processor 205 is merely provided for illustrative purposes. The functionality associated with the engines 235, 240 may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engines 235, 240 may also be embodied as one application or separate applications. In addition, in some UEs, the functionality described for the processor 205 is split among two or more processors such as a baseband processor and an applications processor. The exemplary embodiments may be implemented in any of these or other configurations of a UE.

The memory arrangement 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen. The transceiver 225 may be a hardware component configured to establish a connection with the 5G NR-RAN 120, an LTE-RAN (not pictured), a legacy RAN (not pictured), a WLAN (not pictured), etc. Accordingly, the transceiver 225 may operate on a variety of different frequencies or channels (e.g., set of consecutive frequencies).

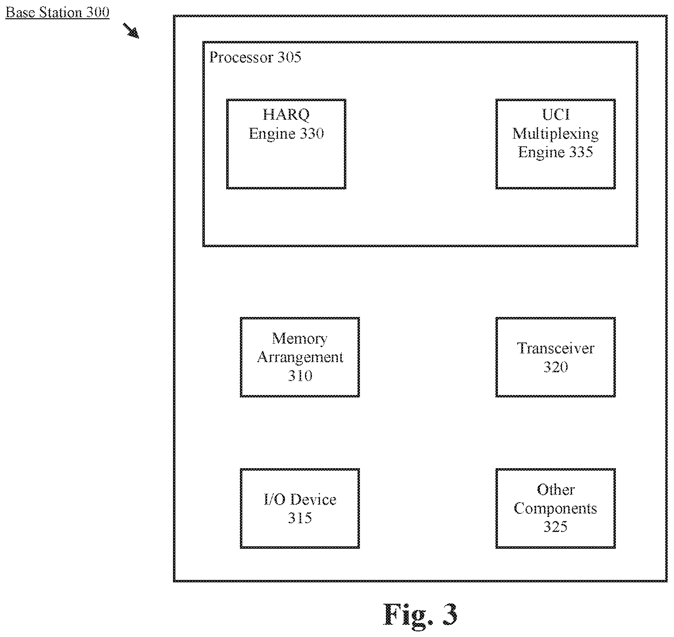

Fig. 3 shows an exemplary base station 300 according to various exemplary embodiments. The base station 300 may represent the gNB 120A or any other access node through which the UE 110 may establish a connection and manage network operations.

The base station 300 may include a processor 305, a memory arrangement 310, an input/output (I/O) device 315, a transceiver 320 and other components 325. The other components 325 may include, for example, an audio input device, an audio output device, a battery, a data acquisition device, ports to electrically connect the base station 300 to other electronic devices, one or more transmission reception points (TRPs), etc.

The processor 305 may be configured to execute a plurality of engines 330, 335 for the base station 300. For example, the engines may include a HARQ engine 330 and a UCI multiplexing engine 335. The HARQ engine 330 may perform various operations related to HARQ such as, but not limited to, configuring HARQ processes, receiving HARQ feedback and enabling simultaneous configuration of HARQ deferral and dynamic PUCCH carrier switching at the UE 110. The UCI multiplexing engine 335 may perform various operations related to UCI multiplexing such as, but not limited to, configuring UCI multiplexing at the UE 110 and receiving multiplexed UCI.

The above noted engines 330, 335 each being an application (e.g., a program) executed by the processor 305 is only exemplary. The functionality associated with the engines 330, 335 may also be represented as a separate incorporated component of the base station 300 or may be a modular component coupled to the base station 300, e.g., an integrated circuit with or without firmware. For example, the integrated circuit may include input circuitry to receive signals and processing circuitry to process the signals and other information. In addition, in some base stations, the functionality described for the processor 305 is split among a plurality of processors (e.g., a baseband processor, an applications processor, etc.). The exemplary embodiments may be implemented in any of these or other configurations of a base station.

The memory 310 may be a hardware component configured to store data related to operations performed by the base station 300. The I/O device 315 may be a hardware component or ports that enable a user to interact with the base station 300. The transceiver 320 may be a hardware component configured to exchange data with the UE 110 and any other UE in the network arrangement 100. The transceiver 320 may operate on a variety of different frequencies or channels (e.g., set of consecutive frequencies). Therefore, the transceiver 320 may include one or more components (e.g., radios) to enable the data exchange with the various networks and UEs.

## Enabling Joint Operation of SPS HARQ Deferral and Dynamic PUCCH Carrier Switching

In one aspect, the exemplary embodiments relate to enabling the joint operation of SPS HARQ deferral and dynamic PUCCH carrier switching at the UE 110. Those skilled in the art will understand that SPS HARQ deferral is a Rel-17 HARQ feedback enhancement introduced to address the issue of SPS HARQ-ACK dropping. For instance, in some networks, HARQ feedback may be dropped when there is a collision in time between HARQ feedback and another uplink or downlink signal at the UE 110. However, it is an inefficient use of resources for the UE 110 to generate and then drop HARQ feedback and may also cause the UE 110 to experience an unnecessary power drain. Thus, SPS HARQ deferral may be utilized by the UE 110 to prevent SPS HARQ-ACK dropping.

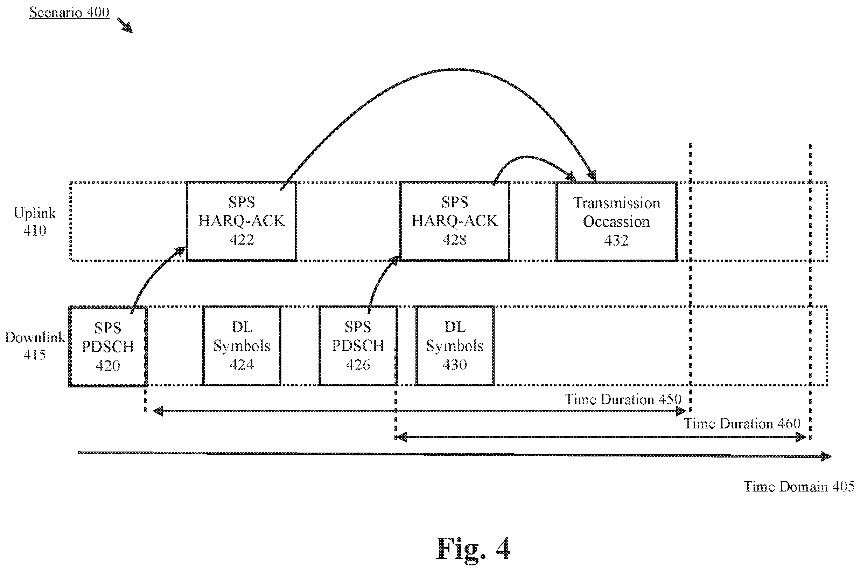

Fig. 4 shows an example of SPS HARQ deferral. The scenario 400 is described from the perspective of the UE 110 and includes a time domain 405, scheduled uplink communications 410 and scheduled downlink communications 415. The following example is not intended to limit the exemplary embodiments in any way. Instead, the following example provides a general overview of SPS HARQ deferral. Specific examples of enabling the joint operation of SPS HARQ deferral and PUCCH carrier switching are provided below after the description of the scenario 400.

In the scenario 400, the UE 110 initially receives SPS physical downlink shared channel (PDSCH) data 420. In response to the SPS PDSCH data 420, the UE 110 is configured to generate and transmit SPS HARQ feedback 422 on the PUCCH.

There may be a collision in time between the SPS HARQ feedback 422 and downlink symbols 424. As a result, the UE 110 may defer the SPS HARQ-ACK feedback 422 to a future occasion and perform the reception of the downlink symbols 424.

The UE 110 then receives SPS PDSCH data 426. In response to the SPS PDSCH data 426, the UE 110 is configured to generate and transmit SPS HARQ-ACK feedback 428 on the PUCCH.

There may be a collision in time between the SPS HARQ-ACK feedback 428 and downlink symbols 430. As a result, the UE 110 may defer the SPS HARQ feedback 428 to a future occasion and perform the reception of the downlink symbols 430.

In this example, both the SPS HARQ-ACK feedback 422 and the SPS HARQ-ACK feedback 428 are deferred to the same future occasion 432. The UE 110 then transmits the deferred SPS HARQ-ACK feedback 422 and deferred SPS HARQ-ACK feedback 428 during the occasion 432.

In some embodiments, there may be a latency budget for SPS HARQ feedback per SPS configuration. Thus, if PUCCH carrying HARQ feedback bits for a SPS configuration collide in time with downlink symbols (or any other appropriate type of signal), then the HARQ feedback may be deferred to a future occasion as long as the latency budget is not exceeded. An example of the latency budget mechanism is shown in the scenario 400 by the time durations 450 and 460. The time duration 450 shows an example of the latency budget for the SPS HARQ-ACK feedback 422. If the UE 110 is unable to transmit the SPS HARQ-ACK feedback 422 prior to the expiration of the time duration 450, the SPS HARQ-ACK feedback 422 may be omitted from subsequent PUCCH occasions and not transmitted. The time duration 460 shows an example of the latency budget for the SPS HARQ-ACK feedback 428. If the UE 110 is unable to transmit the SPS HARQ-ACK feedback 428 prior to the expiration of the time duration 460, the SPS HARQ-ACK feedback 428 may be omitted from subsequent PUCCH occasions and not transmitted. The latency budget for SPS HARQ feedback may be specific to deferred HARQ feedback or may also be applicable to HARQ retransmissions.

The above example of SPS HARQ deferral is provided as a general overview of SPS HARQ deferral and is not intended to limit the exemplary embodiments in any way. Various aspects of SPS HARQ deferral such as, triggering conditions for SPS HARQ deferral and how future PUCCH occasions are determined are beyond the scope of exemplary embodiments. Instead, the exemplary embodiments introduce techniques for enabling the joint operation of SPS HARQ deferral and PUCCH carrier switching.

Those skilled in the art will understand that dynamic PUCCH carrier switching is a Rel-17 HARQ feedback enhancement introduced to reduce HARQ feedback latency. Dynamic PUCCH carrier switching may be performed based on a dynamic indication in downlink control information (DCI), preconfigured PUCCH carrier rules and/or any other appropriate criterion.

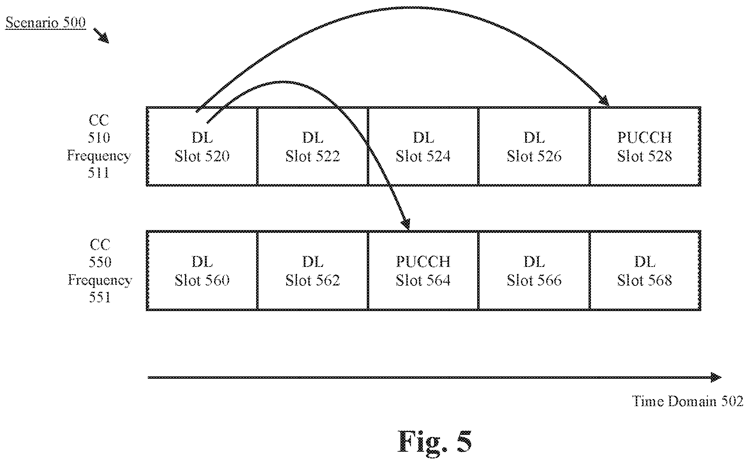

Fig. 5 shows an example of PUCCH carrier switching. The scenario 500 is described from the perspective of the UE 110 and includes a time domain 502, a first CC 510 deployed on frequency band 511 and a second CC 550 deployed on frequency band 551.

On CC 510, downlink communications are scheduled for slots 520-526 and a PUCCH occasion is scheduled for slot 528. On CC 550, downlink communications are scheduled for slots 560, 562, 566, 568 and a PUCCH occassion is scheduled for slot 564. If PUCCH carrier switching is not configured, HARQ feedback for the downlink communication of slot 520 may not be scheduled for transmission until slot 528 on CC 510. However, if PUCCH carrier switching is configured, the UE 110 may transmit HARQ feedback for the downlink communication of slot 520 may be scheduled for transmission on slot 566 of CC 550. Thus, PUCCH carrier switching may allow the UE 110 to transmit HARQ feedback on a different CC that has an earlier PUCCH occasion which may reduce HARQ feedback latency.

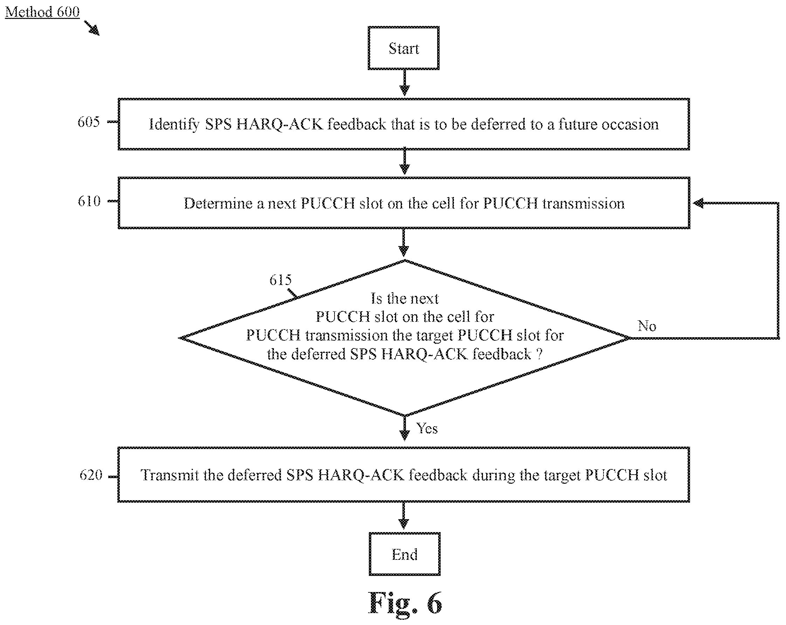

Fig. 6 shows a method 600 for joint operation of SPS HARQ feedback and PUCCH carrier switching according to various exemplary embodiments.

In 605, the UE 110 identifies SPS HARQ-ACK feedback that is to be deferred to a future occasion. In 610, the UE 110 determines a next PUCCH slot on the cell for PUCCH transmission. This determination may be made using dynamic signaling and related rules for dynamic PUCCH cell switching. The dynamic signaling may be DCI or any other appropriate type of signal. The related rules for dynamic PUCCH cell switching may be preconfigured at the UE 110, configured via radio resource control (RRC) signaling, hard encoded in third generation partnership program (3GPP) specifications or provided to the UE 110 in any other appropriate manner.

For SPS HARQ-ACK, the initial slot may be determined by parameter (k1). The term "next PUCCH slot" may represent the slot on the PUCCH cell based on a PUCCH cell pattern which may be mapped from the PUCCH cell (e.g., primary cell (PCell), primary secondary cell (PSCell), PUCCH-secondary cell (SCell), etc.) with increased k1.

In 615, the UE 110 determines whether the next PUCCH slot on the cell for PUCCH transmission is the target PUCCH slot for the deferred SPS HARQ-ACK feedback. This determination may be performed based on SPS HARQ-ACK deferral rules. The rules for SPS HARQ-ACK deferral may be preconfigured at the UE 110, configured via RRC signaling, hard encoded in 3GPP specifications or provided to the UE 110 in any other appropriate manner.

If the next PUCCH slot on the cell for PUCCH transmission is not the target PUCCH slot, the method 600 returns to 610. If the next PUCCH slot on the cell for PUCCH is the target PUCCH slot, the method 600 continues to 620. In 620, the UE 110 transmits the deferred SPS HARQ-ACK feedback during the target PUCCH slot.

Within the context of the method 600, consider an example scenario where the dynamic signaling indicated CC is a PCell, PSCell or PUCCH-SCell. In this scenario, the PUCCH slot duration for the PUCCH as indicated by the dynamic signaling is a same slot duration as the SPS HARQ deferral slot duration.

If the dynamic signaling indicated CC does not correspond to the PCell, PSCell or PUCCH-SCell (e.g., an alternative cell or CC, etc.), the first PUCCH slot on the PCell, PSCell or PUCCH-SCell which overlaps in time with the dynamically indicated PUCCH on the alternative CC is identified as a PUCCH occasion. This may allow the UE 110 to determine a PUCCH slot duration for the target PUCCH slot when the target PUCCH slot is on the CC that does not correspond to the PCell, PSCell or PUCCH-SCell.

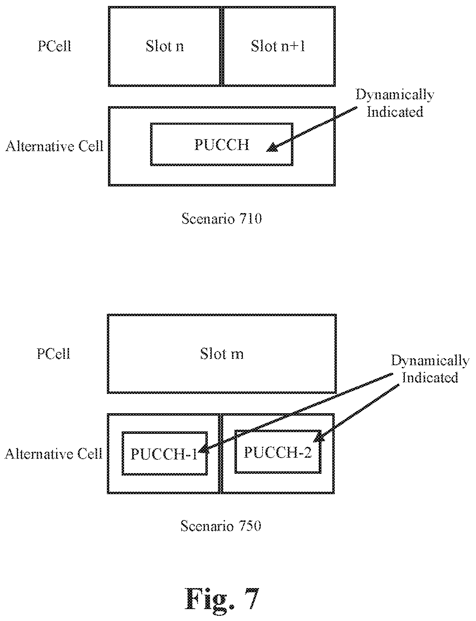

Fig. 7 shows two example scenarios 710, 750 where the dynamically indicated CC is an alternative CC. These examples are described with regard to a PCell and an alternative cell. However, those skilled in the art will understand that the exemplary concepts may also apply to scenarios involving a PSCell or PUCCH-SCell instead of the PCell.

In example scenario 710, the PCell is configured with a subcarrier spacing (SCS) of 30 KHz and the alternative cell is configured with a SCS of 15 KHz. Thus, the UE 110 may identify slot n on the PCell CC.

In the example, scenario 750, the PCell is configured with a SCS of 15 KHz and the alternative cell is configured with a SCS of 30 KHz. In this example, the UE 110 may identify slot m by PUCCH-1, PUCCH-2 or both. In some embodiments, if there are two or more PUCCHs dynamically indicated on the alternative CC which overlap with slot m on the PCell, the first indicated PUCCH may carry SPS HARQ deferral. Alternatively, one bit or one code state in DCI may be introduced to explicitly trigger SPS HARQ deferral.

### UCI Multiplexing - CSI Payload Size Indication Design

In another aspect, the exemplary embodiments relate to UCI multiplexing. Some of the exemplary embodiments are described with regard to a three-part UCI multiplexing scheme. As will be described in more detail below, different types of UCI may be multiplexed and encoded together in one of three different UCI parts and then transmitted over the PUSCH. Throughout this description, to differentiate between different UCI parts, reference is made to "UCI part 0," "UCI pat I" and "UCI part II."

In addition, some of the exemplary embodiments are described with regard to two-part CSI feedback. Throughout this description, to differentiate between different parts of CSI feedback, reference is made to "CSI part I" and "CSI part II." In addition, the terms "CSI part I" and "CSI part 1" may be used interchangeably throughout this description and the terms "CSI part II" and "CSI part 2" may also be used interchangeably throughout this description.

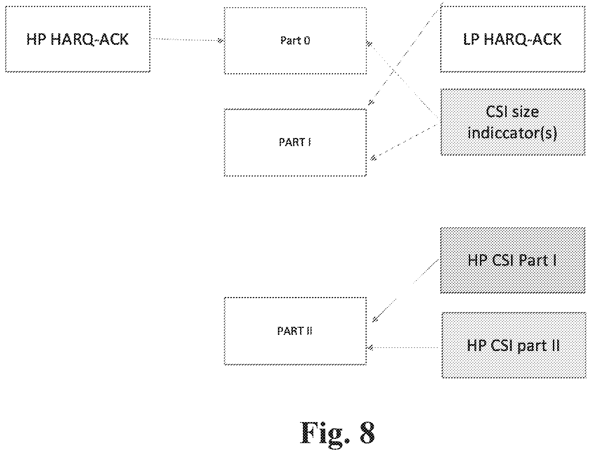

Fig. 8 shows an exemplary mapping between different types of UCI and UCI parts according to various exemplary embodiments. In Rel-15 and Rel-16, UCI part 0, UCI part I correspond to HARQ-ACK feedback, CSI part I and CSI part II. In this description, UCI part 0, UCI part I and UCI part II may be used in the manner in which they are defined in Rel-15/Rel-16 and may be modified in accordance with the following examples described herein. In this example, HP HARQ-ACK is mapped to UCI part 0, LP HARQ-ACK is mapped to UCI Part I, HP CSI Part I is mapped to UCI Part II and HP CSI part II is mapped to UCI part II. In addition, one or more CSI payload size indicators may be mapped to UCI part 0 or UCI part I. As will be described in more detail below, CSI part I and CSI part II may be jointly encoded or separately encoded.

The nominal encoder chain may comprise three nominal encoders when joint encoding of CSI part I and CSI part II is utilized. One encoder may be used for HP HARQ-ACK, one encoder may be used for LP HARQ-ACK and one encoder may be used for CSI (e.g., CSI part I and CSI part II). In some embodiments, the encoder for HP HARQ-ACK may also be used for the CSI payload size indication. In other embodiments, the encoder for LP HARQ-ACK may also be used for the CSI payload size indication. In addition, it may be assumed that a same beta factor (e.g., spectral efficiency) is to be used for CSI part I and CSI part II.

In 5G NR Rel-17 the largest payload size may equal 1706 bits due to the limitation on polar encoding. To indicate the number of combined payload size bits including cyclic redundancy check (CRC) up to 1706 bits, 11 bits may be needed for the CSI payload size indication. Accordingly, it has been identified that the size of the CSI payload size indication is not negligible and there is a need for techniques that consider the size of the overhead for the CSI payload size indication.

In some embodiments, the CSI payload indication may be fixed at a predetermined number of bits. For example, the CSI payload indication may be fixed as 11 bits or any other appropriate size.

In other embodiments, the CSI payload size indication is not fixed at a predetermined number of bits. Instead, the number of bits for the CSI payload size indication may be based on the maximum payload size of CSI reporting associated with a trigger state in the DCI. For example, if all of the CSI reports are to be reported and none are to be omitted, the total payload size (with or without CRC bits) determines the field size of the CSI payload size indication.

In another approach, CSI omission for CSI part II may be considered when for the CSI payload size indication. CSI part II may consist of various CSI groups. Throughout this description, to differentiate between different CSI groups, reference is made to "CSI group 0," "CSI group 1" and "CSI group 2."

CSI part II may comprise one or more CSI reports (e.g., 1-N). The contents of each report may be organized into CSI groups 0-3. Thus, CSI part II may comprise one or more instances of CSI group 0, one or more instances of CSI group 1 and one or more instances of CSI group 2. The contents of each CSI group is beyond the scope of the exemplary embodiments, those skilled in the art will understand the type of parameters that may be considered CSI group 0, CSI group 1 and CSI group 2.

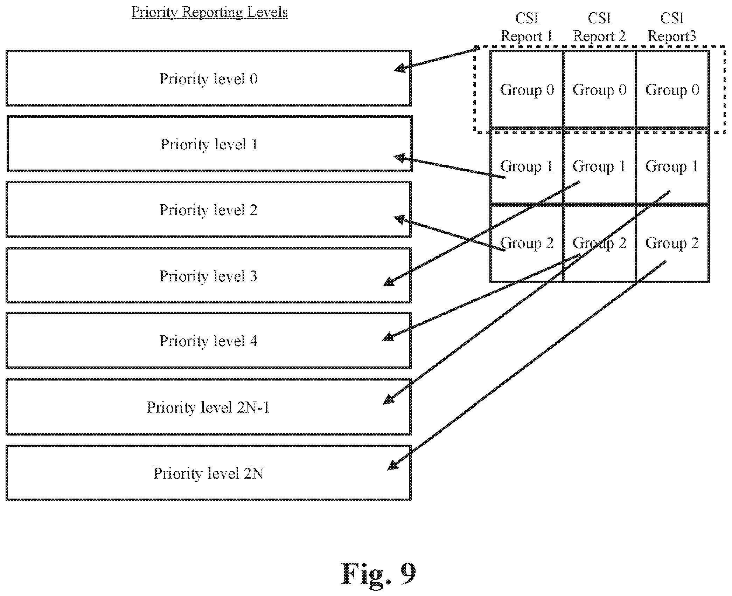

Each CSI group from the N CSI reports may be mapped to a priority reporting level. An example of this mapping is shown in Fig. 9 for three CSI reports (e.g., N=3). The highest priority level (e.g., priority level 0) may comprise CSI group 0 from CSI reports 1-N. The remaining instances of CSI group 1 and CSI group 2 across the N CSI reports may each be mapped to a different priority level (e.g., priority 1-2N). During operation, for any of a variety of different reasons, CSI groups may be discarded in accordance with their priority reporting level. For instance, consider a scenario where priority level 0 is the highest priority and priority level 2N is the lowest priority in the hierarchy. If CSI groups are to be omitted from CSI part II, the CSI group corresponding to priority level 2N is to be omitted first, the CSI group corresponding to priority level 2N-1 is to be omitted second, etc.

In this approach, the CSI payload size indication may be configured to indicate whether CSI group 0 is discarded, the number of CSI reports included in CSI group 1 and the number of CSI reports included in CSI group 2. Since CSI group 0 from the N reports are all included in the highest priority level, if CSI group 0 is discarded then CSI part II is discarded (or omitted) in its entirety.

For the number of CSI reports included in CSI group 1, the signaling bit width may be derived based on the number of CSI reports under a trigger state. This approach may exploit the assumption that there are up to 16 CSI reports per trigger state. For instance, consider a scenario where there are 7 CSI reports under one trigger state and the derived bit width for indicating a number of CSI reports with CSI group 1 is 3 bits (e.g., 000-111). If 3 CSI reports with CSI group 1 are not omitted, then "011" (for 3) may be reported. If all CSI reports with CSI group 1 are omitted, then "000" (for 0) may be reported.

For the number of CSI reported included in CSI group 2, using the number of CSI group 1, a single code state may be sed to indicate whether the last included CSI group 1 has a CSI group 2 counterpart included in UCI as well.

Accordingly, the CSI payload size indication may comprise 1 bit configured to indicate whether CSI group 0 is omitted, up to 4 bits to indicate the number of CSI reports with group 1 CSI (e.g., 0000-1111) and 1 bit to indicate whether CSI group 2 is present for the last indicated CSI report. For example, if the CSI payload size indication indicates that 3 CSI reports with group 1 CSI are included, then this bit may indicate whether CSI group 2 is present for the third CSI report. Due to the priority hierarchy, only the CSI report with the lowest priority may have its CSI group 1 included and its CSI group 2 omitted. Thus, only a single bit may be used since it may be assumed that the other CSI reports have both CSI group 1 and CSI group 2 included.

As indicated above, in some embodiments, instead of using 4 bits to indicate the number of CSI reports with group 1 CSI, any appropriate bit width (L) may be derived according to the number of CSI reports configured under a trigger state and used with the above-described configuration.

In another embodiment, the number of configured CSI reports under a trigger state may be represented by (M). The equation ($2 * M + 1$) may be used to determine the number of code states to be used to report the CSI payload size. For example, 2 code states may be used to indicate the presence of a CSI report and whether group 2 for the CSI report is included. Since there are M CSI reports, then $2 * M$ code states may be used and 1 code state may be used to indicate whether group 0 is omitted or not. In this example, the signaling field width may be $ceil(log2(1 + 2 * M))$ bits.

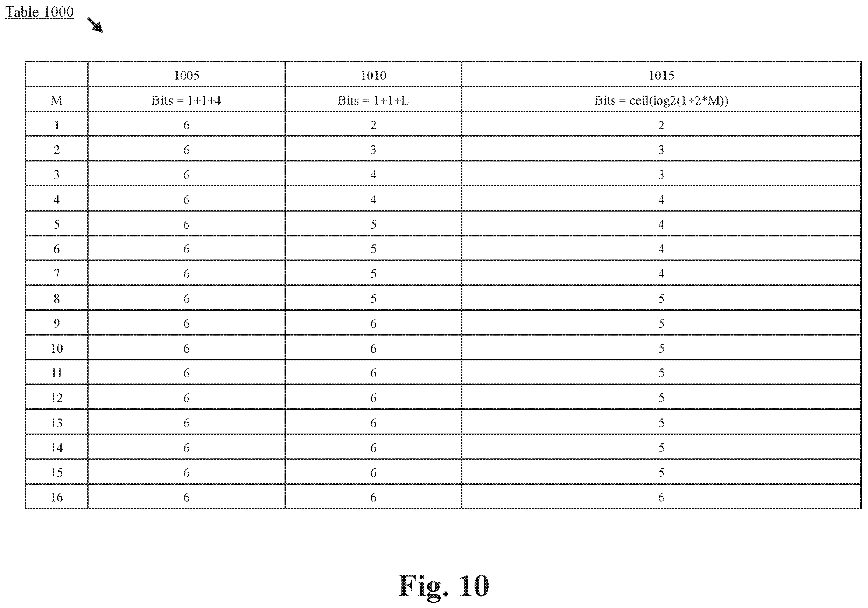

Fig. 10 shows a table 1000 comparing the signaling overhead for the CSI payload size indication in accordance with various exemplary embodiments. In the table 1000, the variable M represents the number of CSI reports per trigger state. As mentioned above, there may be up to 16 CSI reports per trigger state.

Column 1005 shows the signaling overhead for the CSI payload size indication when a static approach is used. In the static approach, 1 bit may be configured to indicate whether CSI group 0 is omitted, 4 bits may be configured to indicate the number of CSI reports with group 1 CSI (e.g., 0000-1111) and 1 bit may be configured to indicate whether CSI group 2 is present for the last indicated CSI report. Thus, regardless of the number of CSI report per trigger state, the approach used for column 1005 results in a CSI report payload size indication comprising 6 bits.

Column 1010 shows the signaling overhead for the CSI payload size indication when 1 bit is configured to indicate whether CSI group 0 is omitted, 1 bit is configured to indicate whether CSI group 2 is present for the last indicated CSI report and L bits are configured to indicate the number of CSI group 1. As indicated above, L may be derived based on M. For example, if there is 1 CSI report per trigger state, 0 bits may be used to indicate the number of CSI group 1 because the presence of CSI group 1 may be implied by the other bits. If there are 2 CSI reports per trigger state, 1 bit (e.g., 0-1) may be used to indicate the number of CSI group 1. If there are 3 or 4 CSI reports per trigger state, 2 bits may be used (e.g., 00-11) to indicate the number of CSI group 1. If there are 5-8 CSI reports per trigger state, 3 bits (e.g., 000-111) may be used to indicate the number of CSI group 1. If there are 9-16 CSI reports per trigger state, 4 bits (e.g., 0000-1111) may be used to indicate the number of CSI group 1.

Column 1015 shows the signaling overhead for the CSI payload size indication is based on the equation $ceil(log2(1 + 2 * M))$. For instance, as described above, 1 code state may be used to indicate whether group 0 is omitted or not and 2 code states may be used to indicate the presence of a CSI report and whether group 2 for the CSI report is included. Since there are M CSI reports, then $2 * M$ code states may be used.

If the feedback size is known through a rule (e.g., only rank 1 feedback is allowed, etc.) then the UE 110 and the network may have a common understanding with regards to UCI payload size that does not need to be explicitly signaled. Thus, in some embodiments, the CSI payload size indication may be omitted.

In some embodiments, separate encoding of CSI part I and CSI part II may be performed. The nominal encoder chain may consist of four nominal encoders when separate encoding of CSI part I and CSI part II is utilized. One encoder may be configured for HP HARQ-ACK, one encoder may be configured for LP HARQ-ACK, one encoder may be configured for CSI part I and one encoder may be configured for CSI part II.

In some embodiments, the encoders for CSI part I and CSI part II may be configured to utilize different beta factors. In other embodiments, the encoders for CSI part I and CSI part II may be configured to utilize a common beta factor. within UCI part II, the UE 110 may first allocate resources to CSI part I according to the targeted beta factor and then the remaining portion of UCI part II may be allowed to CSI part II.

### UCI Multiplexing - HARQ-ACK Handling Techniques

In some embodiments, the HP HARQ-ACK feedback may be prioritized over LP PUSCH. For example, if the UCI is to be carried over LP PUSCH and there are insufficient resources for the HP HARQ-ACK feedback, the LP PUSCH may be dropped to ensure that the HP PUCCH carrying the HPHARQ-ACK is transmitted. In some scenarios, there may not be enough resources to carry all of the HP HARQ-ACK feedback bits in UCI part 0. In this type of scenario, if the HP HARQ-ACK feedback bits consist of initial HARQ-ACK feedback bits and deferred SPS HARQ-ACK feedback bits, the deferred SPS HARQ-ACK bits may be omitted first.

In some scenarios, UCI part I may be insufficient for LP HARQ-ACK feedback over PUSCH (e.g., LP PUSCH or HP PUSCH). In this type of scenario, if the LP HARQ-ACK consists of initial HARQ feedback bits and deferred SPS HARQ-ACK bits, the deferred SPS HARQ-ACK bits may be omitted first.

In some embodiments, one-shot HARQ retransmission on PUCCH may be configured. Generally, one-shot HARQ retransmission may include DCI received at a first time indicating a subsequent transmission occasion for initial HARQ-ACK feedback and DCI received at a second time (subsequent to the first time) indicating a transmission occasion for retransmitted HARQ-ACK feedback.

Within the context of one-shot HARQ retransmission scheme and three-part UCI multiplexing scheme shown in Fig. 8, the HP HARQ-ACK may comprise HP initial HARQ-ACK and/or HP HARQ-ACK for retransmission. Similarly, the LP HARQ-ACK may comprise LP initial HARQ-AKC and/or LP HARQ-ACK for retransmission. In some embodiments, if the UCI is to be carried over LP PUSCH and there are insufficient resources for the HP HARQ-ACK feedback (e.g., HP initial HARQ-ACK and/or HP HARQ-ACK for retransmission, etc.) the LP PUSCH may be dropped to ensure that the HP PUCCH carrying the HP HARQ-ACK is transmitted. In some scenarios, there may not be enough resources to carry all of the HP HARQ-ACK feedback bits in UCI part 0. In this type of scenario, if the HP HARQ-ACK feedback bits consist of initial HARQ-ACK feedback bits and HP retransmission HARQ-ACK feedback bits, the HP retransmission HARQ-ACK bits may be omitted first.

In some scenarios, UCI part I may be insufficient for LP HARQ-ACK feedback over PUSCH (e.g., LP PUSCH or HP PUSCH). In this type of scenario, if the LP HARQ-ACK consists of initial HARQ feedback bits and retransmission HARQ-ACK feedback bits, the retransmission HARQ-ACK bits may be omitted first.

In some scenarios, due to an overlap of HP PUCCH carrying HP HARQ-ACK and a LP configured grant (CG) PUSCH, the LP PUSCH may be used to carry HP HARQ-ACK. For example, in Rel-16, CG-UCI has been used to provide control information to the gNB in a configured grant PUSCH. If HP HARQ-ACK and CG-UCI are to be multiplexed over UCI part 0 over a LP CG PUSCH, there may not be enough resources to carry HP HARQ-ACK feedback bits and CG-UCI bits in the UCI part 0. In one example, the LP CG PUSCH is dropped and HP HARQ-ACK is transmitted in the HP PUCCH. In another example, if the HP HARQ-ACK consists of initial HARQ-ACK feedback bits and HP HARQ-ACK for retransmission, the deferred SPS HARQ-ACK bits may be omitted first, and the CG-UCI and HP initial HARQ-ACK are transmitted over the LP CG PUSCH.

### Triggering HARQ-ACK Omission for a PUSCH Transmission

In some scenarios, the UE 110 may have a number of instances of different types of HARQ-ACK feedback that are to be transmitted to the network that exceeds the capacity of the uplink resources available for the HARQ-ACK feedback transmission. Throughout this description, examples are provided where the UE 110 omits different types of UCI from a subsequent transmission. Generally, when UCI is omitted, it may be deferred for subsequent transmission, or it may be discarded and never transmitted. Otherwise, the UCI may be multiplexed for transmission on an uplink channel (e.g., PUSCH, PUCCH, etc.).

The following exemplary embodiments introduce techniques for triggering HARQ-ACK omission prior to a HARQ-ACK transmission on the PUSCH. As will be described in more detail below, the exemplary embodiments introduce three HARQ-ACK omission triggering parameters $f_1$, $f(\alpha)$ and $f_2$. However, reference to the parameters $f_1$, $f(\alpha)$ and $f_2$ is provided for illustrative purposes, different entities may refer to similar concepts using different names and/or notations.

When a HARQ-ACK transmission on the PUSCH is to be performed during a subsequent time window, the UE 110 may determine whether the transmission is to include different types of HARQ-ACK feedback (e.g., initial HARQ-ACK feedback, deferred HARQ-ACK feedback, HARQ-ACK retransmission, etc.). In addition, the UE 110 may derive the three HARQ-ACK omission triggering parameters $f_1$, $f(\alpha)$ and $f_2$.

HARQ-ACK omission may be triggered for a subsequent HARQ-ACK transmission on the PUSCH when i) the HARQ-ACK transmission on the PUSCH is to include one or more instances of initial HARQ-ACK feedback and one or more instances of a different type of HARQ-ACK feedback (e.g., deferred HARQ-ACK, HARQ-ACK retransmission, etc,) and ii) when $f_1 > f(\alpha)$ and/or $f_1 > f_2$. The following exemplary embodiments provide examples for deriving the three HARQ-ACK omission triggering parameters $f_1$, $f(\alpha)$ and $f_2$ under various different circumstances.

These exemplary techniques are described with regard to 3GPP TS 38.212. In the following examples, the terms from 3GPP TS 38.212 are to be used in the manner in which they are defined in TS 38.212 and/or may be modified in accordance with the following examples.

The three HARQ-ACK omission triggering parameters $f_1$, $f(\alpha)$ and $f_2$ may be derived based on factors such as, but not limited to, whether the subsequent PUSCH transmission is configured with PUSCH repetition type B, whether the subsequent PUSCH transmission is to include uplink data (e.g., a transport block, UL-SCH, etc.), whether a parameter *numberOfSlotsTBoMS* is present in a resource allocation table, a value of the parameter *numberOfSlotsTBoMS* in a row indicated by a parameter in DCI and a number of coded modulation symbols per layer for HARQ-ACK transmission. In addition, the HARQ-ACK omission triggering parameters may be derived based on factors associated with a CSI part 1 transmission.

In one example, for HARQ-ACK transmission on PUSCH where repetition type B with UL-SCH is not configured and *numberOfSlotsTBoMS* is not present in a resource allocation table, or if *numberOfSlotsTBoMS* is present in the resource allocation table and the value of *numberOfSlotsTBoMS* in the row indicated by the time domain resource assignment field in DCI is equal to 1, the number of coded modulation symbols per layer for HARQ-ACK transmission, denoted as $Q'_{ACK}$, may be determined as follows:

$$Q'_{ACK} = \min\{f_1, f(\alpha)\}$$

where, $f_1 = \left\lceil \dfrac{(O_{ACK}+L_{ACK}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil$, and

$$f(\alpha) = \left\lceil \alpha \cdot \sum_{l=l_0}^{N_{symb,all}^{PUSCH}-1} M_{sc}^{UCI}(l) \right\rceil$$

Here, $O_{ACK}$ may represent the number of HARQ-ACK bits. If $O_{ACK} \geq 360$, $L_{ACK} = 11$, otherwise $L_{ACK}$ may be the number of CRC bits for HARQ-ACK determined according to 3GPP TS 38.212 or in any other appropriate manner.

In addition, $\beta_{offset}^{PUSCH} = \beta_{offset}^{HARQ-ACK}$ and $C_{UL-SCH}$ may represent the number of code blocks for UL-SCH of the PUSCH transmission. If the DCI format scheduling the PUSCH transmission includes a code block group (CBG) transmission information (CBGTI) field indicating that the UE shall not transmit the $r$-th code block, $K_r=0$. Otherwise, $K_r$ may be the $r$-th code block size for UL-SCH of the PUSCH transmission.

Further, $M_{sc}^{PUSCH}$ may be the scheduled bandwidth of the PUSCH transmission, expressed as a number of subcarriers. $M_{sc}^{PT-RS}(l)$ may be the number of subcarriers in OFDM symbol $l$ that carries PTRS, in the PUSCH transmission and $M_{sc}^{UCI}(l)$ may be the number of resource elements that can be used for transmission of UCI in OFDM symbol l, for $l = 0, 1, 2, \ldots, N_{symb,all}^{PUSCH} - 1$, in the PUSCH transmission and $N_{symb,all}^{PUSCH}$ is the total number of OFDM symbols of the PUSCH, including all OFDM symbols used for DMRS.

For any OFDM symbol that carries DMRS of the PUSCH, $M_{sc}^{UCI}(l) = 0$. For any OFDM symbol that does not carry DMRS of the PUSCH, $M_{sc}^{UCI}(l) = M_{sc}^{PUSCH} - M_{sc}^{PT-RS}(l)$;

The parameter $\alpha$ may be configured by higher layer parameter *scaling* and $l_0$ may be the symbol index of the first OFDM symbol that does not carry DMRS of the PUSCH, after the first DMRS symbol(s), in the PUSCH transmission.

In another example, for HARQ-ACK transmission on PUSCH not using repetition type B with UL-SCH, and if *numberOfSlotsTBoMS* is present in the resource allocation table and the value of *numberOfSlotsTBoMS* in the row indicated by the time domain resource assignment field in DCI is larger than 1, the number of coded modulation symbols per layer for HARQ-ACK transmission, denoted as $Q'_{ACK}$, may be determined as follows:

$$Q'_{ACK} = \min\{f_1, f(\alpha)\}$$

Where, $f_1 = \left\lceil \dfrac{(O_{ACK}+L_{ACK}) \cdot \beta_{offset}^{PUSCH} \cdot \sum_{l=0}^{N_{symb,all}^{PUSCH}-1} M_{sc}^{UCI}(l)}{\frac{1}{N_S} \sum_{r=0}^{C_{UL-SCH}-1} K_r} \right\rceil$, and

$$f(\alpha) = \left\lceil \alpha \cdot \sum_{l=l_0}^{N_{symb,all}^{PUSCH}-1} M_{sc}^{UCI}(l) \right\rceil$$

Here, $N_S$ may represent the value of *numberOfSlotsTBoMS* in the row indicated by the time domain resource assignment field in DCI. The parameter $M_{sc}^{PT-RS}(l)$ may be the number of subcarriers in OFDM symbol l that carries PTRS, in the PUSCH transmission of TB processing over multiple slots in the slot with the HARQ-ACK transmission. The parameter $M_{sc}^{UCI}(l)$ may be the number of resource elements that can be used for transmission of UCI in OFDM symbol $l$, for $l = 0, 1, 2, \ldots, N_{symb,all}^{PUSCH} - 1$, in the PUSCH transmission of TB processing over multiple slots in the slot with the HARQ-ACK transmission. Further, the parameter $N_{symb,all}^{PUSCH}$ may be the total number of OFDM symbols of the PUSCH in the slot, including all OFDM symbols used for DMRS.

The parameter $l_0$ may be the symbol index of the first OFDM symbol that does not carry DMRS of the PUSCH, after the first DMRS symbol, in the PUSCH transmission of TB processing over multiple slots in the slot with the HARQ-ACK transmission. The other notations in the formula may be defined the same as for PUSCH not using repetition type B and if *numberOfSlotsTBoMS* is not present in the resource allocation table.

In another example, for HARQ-ACK transmission on an actual repetition of a PUSCH with repetition Type B with UL-SCH, the number of coded modulation symbols per layer for HARQ-ACK transmission, denoted as $Q'_{ACK}$, may be determined as follows:

$$Q'_{ACK} = \min\{f_1, \ f(\alpha), \ f_2\}$$

Where, $f_1 = \left\lceil \dfrac{(O_{ACK} + L_{ACK}) \cdot \beta_{offset}^{PUSCH} \cdot \sum_{l=0}^{N_{symb,nominal}^{PUSCH} - 1} M_{sc,nominal}^{UCI}(l)}{\sum_{r=0}^{C_{UL\text{-}SCH} - 1} K_r} \right\rceil$,

$$f(\alpha) = \left\lceil \alpha \cdot \sum_{l=0}^{N_{symb,nominal}^{PUSCH} - 1} M_{sc,nominal}^{UCI}(l) \right\rceil,$$

and

$$f_2 = \sum_{l=0}^{N_{symb,actual}^{PUSCH} - 1} M_{sc,actual}^{UCI}(l)$$

The parameter $M_{sc,nominal}^{UCI}(l)$ may represent the number of resource elements that can be used for transmission of UCI in OFDM symbol $l$, for $l = 0, 1, 2, \cdots, N_{symb,nominal}^{PUSCH} - 1$, in the PUSCH transmission assuming a nominal repetition without segmentation, and $N_{symb,nominal}^{PUSCH}$ is the total number of OFDM symbols in a nominal repetition of the PUSCH, including all OFDM symbols used for DMRS. For any OFDM symbol that carries DMRS of the PUSCH assuming a nominal repetition without segmentation, $M_{sc,nominal}^{UCI}(l) = 0$.

For any OFDM symbol that does not carry DMRS of the PUSCH assuming a nominal repetition without segmentation, $M_{sc,nominal}^{UCI}(l) = M_{sc}^{PUSCH} - M_{sc,nominal}^{PT\text{-}RS}(l)$ where $M_{sc,nominal}^{PT\text{-}RS}(l)$ is the number of subcarriers in OFDM symbol l that carries PTRS, in the PUSCH transmission assuming a nominal repetition without segmentation.

The parameter $M_{sc,actual}^{UCI}(l)$ may represent the number of resource elements that can be used for transmission of UCI in OFDM symbol $l$, for $l = 0, 1, 2, \cdots, N_{symb,actual}^{PUSCH} - 1$, in the actual repetition of the PUSCH transmission, and $N_{symb,actual}^{PUSCH}$ is the total number of OFDM symbols in the actual repetition of the PUSCH transmission, including all OFDM symbols used for DMRS.

For any OFDM symbol that carries DMRS of the actual repetition of the PUSCH transmission, $M_{sc,actual}^{UCI}(l) = 0$. For any OFDM symbol that does not carry DMRS of the actual repetition of the PUSCH transmission, $M_{sc,actual}^{UCI}(l) = M_{sc}^{PUSCH} - M_{sc,actual}^{PT\text{-}RS}(l)$ where $M_{sc,actual}^{PT\text{-}RS}(l)$ is the number of subcarriers in OFDM symbol l that carries PTRS, in the actual repetition of the PUSCH transmission. The other notations in the formula are defined the same as for PUSCH not using repetition type B and if *numberOfSlotsTBoMS* is not present in the resource allocation table.

In another example, for HARQ-ACK transmission on PUSCH without UL-SCH, the number of coded modulation symbols per layer for HARQ-ACK transmission, denoted as $Q'_{\text{ACK}}$, may be determined as follows:

$$Q'_{\text{ACK}} = \min\{f_1, f(\alpha)\}$$

Where, $f_1 = \left\lceil \frac{(O_{\text{ACK}} + L_{\text{ACK}}) \cdot \beta_{\text{offset}}^{\text{PUSCH}}}{R \cdot Q_m} \right\rceil$, and

$$f(\alpha) = \left\lceil \alpha \cdot \sum_{l=l_0}^{N_{\text{symb,all}}^{\text{PUSCH}}-1} M_{\text{sc}}^{\text{UCI}}(l) \right\rceil$$

The parameter $O_{\text{ACK}}$ may represent the number of HARQ-ACK bits. If $O_{\text{ACK}} \geq 360$, $L_{\text{ACK}} = 11$, otherwise $L_{\text{ACK}}$ is the number of CRC bits for HARQ-ACK defined according to 3GPP TS 38.212 or in any other appropriate manner.

Here, $\beta_{\text{offset}}^{\text{PUSCH}} = \beta_{\text{offset}}^{\text{HARQ-ACK}}$. In addition, the parameter $M_{\text{sc}}^{\text{PUSCH}}$ may be the scheduled bandwidth of the PUSCH transmission, expressed as a number of subcarriers, the parameter may be the $M_{\text{sc}}^{\text{PT-RS}}(l)$ is the number of subcarriers in OFDM symbol *l* that carries PTRS, in the PUSCH transmission and the parameter $M_{\text{sc}}^{\text{UCI}}(l)$ may represent the number of resource elements that can be used for transmission of UCI in OFDM symbol *l*, for $l = 0, 1, 2, \ldots, N_{\text{symb,all}}^{\text{PUSCH}} - 1$, in the PUSCH transmission and $N_{\text{symb,all}}^{\text{PUSCH}}$ is the total number of OFDM symbols of the PUSCH, including all OFDM symbols used for DMRS.

For any OFDM symbol that carries DMRS of the PUSCH, $M_{\text{sc}}^{\text{UCI}}(l) = 0$. For any OFDM symbol that does not carry DMRS of the PUSCH, $M_{\text{sc}}^{\text{UCI}}(l) = M_{\text{sc}}^{\text{PUSCH}} - M_{\text{sc}}^{\text{PT-RS}}(l)$. The parameter $l_0$ may be the symbol index of the first OFDM symbol that does not carry DMRS of the PUSCH, after the first DMRS symbol(s), in the PUSCH transmission.

The parameter $R$ may be the code rate of the PUSCH, determined according to TS 38.214 or in any other appropriate manner. The parameter may be the $Q_m$ is the modulation order of the PUSCH. The parameter $\alpha$ may be configured by higher layer parameter *scaling.*

The input bit sequence to rate matching may be represented by $d_{r0}, d_{r1}, d_{r2}, d_{r3}, \ldots, d_{r(N_r-1)}$ where *r* is the code block number, and $N_r$ is the number of coded bits in code block number *r*. Rate matching may be performed according to 3GPP TS 38.212 or in any other appropriate manner. By setting $I_{\text{BIL}} = 1$ and the rate matching output sequence length to $E_r = \lfloor E_{\text{UCI}}/C_{\text{UCI}} \rfloor$.

Here, $C_{\text{UCI}}$ may be the number of code blocks for UCI determined according to 3GPP TS 38.212 or in any other appropriate manner. The parameter $N_L$ may be the number of transmission layers of the PUSCH, the parameter $Q_m$ may be the modulation order of the PUSCH and $E_{\text{UCI}} = N_L \cdot Q'_{\text{ACK}} \cdot Q_m$. The output bit sequence after rate matching is denoted as $f_{r0}, f_{r1}, f_{r2}, \ldots, f_{r(E_r-1)}$ where $E_r$ is the length of rate matching output sequence in code block number *r*.

In another example, for CSI part 1 transmission on PUSCH not using repetition type B with UL-SCH and if *numberOfSlotsTBoMS* is not present in the resource allocation table, or if *numberOfSlotsTBoMS* is present in the resource allocation table and the value of *numberOfSlotsTBoMS* in the row indicated by the Time domain resource assignment field in DCI is equal to 1, the number of coded modulation symbols per layer for CSI part 1 transmission, denoted as $Q'_{\text{CSI-part1}}$, may be determined as follows:

$$Q'_{CSI-1} = \min\{f_1, f(\alpha)\}$$

Where, $f_1 = \left\lceil \frac{(O_{CSI-1} + L_{CSI-1}) \cdot \beta_{\text{offset}}^{\text{PUSCH}} \cdot \sum_{l=0}^{N_{symb,all}^{\text{PUSCH}}-1} M_{\text{sc}}^{\text{UCI}}(l)}{\sum_{r=0}^{C_{\text{UL-SCH}}-1} K_r} \right\rceil$, and

$$f(\alpha) = \left\lceil \alpha \cdot \sum_{l=0}^{N_{symb,all}^{PUSCH}-1} M_{sc}^{UCI}(l) \right\rceil - Q'_{ACK/CG-UCI}$$

The parameter $O_{CSI-1}$ may be the number of bits for CSI part 1. If $O_{CSI-1} \geq 360$, $L_{CSI-1} = 11$, otherwise $L_{CSI-1}$ is the number of CRC bits for CSI part 1 determined according to 3GPP TS 38.212 or in any other appropriate manner.

Here, $\beta_{offset}^{PUSCH} = \beta_{offset}^{CSI-part1}$. The parameter $C_{UL-SCH}$ may be the number of code blocks for UL-SCH of the PUSCH transmission. If the DCI format scheduling the PUSCH transmission includes a CBGTI field indicating that the UE shall not transmit the $r$-th code block, $K_r = 0$. Otherwise, $K_r$ is the $r$-th code block size for UL-SCH of the PUSCH transmission.

The parameter $M_{sc}^{PUSCH}$ may be the scheduled bandwidth of the PUSCH transmission, expressed as a number of subcarriers. The parameter may $M_{sc}^{PT-RS}(l)$ is the number of subcarriers in OFDM symbol $l$ that carries PTRS, in the PUSCH transmission. In addition, the parameter may be $Q'_{ACK/CG-UCI} = Q'_{ACK}$.

If HARQ-ACK is present for transmission on the same PUSCH with UL-SCH and without CG-UCI, where $Q'_{ACK}$ is the number of coded modulation symbols per layer for HARQ-ACK transmitted on the PUSCH as defined in 3GPP TS 38.212 or in any other appropriate manner. If number of HARQ-ACK information bits is more than 2, and $Q'_{ACK} = \sum_{l=0}^{N_{symb,all}^{PUSCH}-1} \bar{M}_{sc,\ rvd}^{ACK}(l)$. If the number of HARQ-ACK information bits is no more than 2 bits, where $\bar{M}_{sc,\ rvd}^{ACK}(l)$ is the number of reserved resource elements for potential HARQ-ACK transmission in OFDM symbol $l$, for $l = 0, 1, 2, \ldots, N_{symb,all}^{PUSCH} - 1$, in the PUSCH transmission, as defined in 3GPP TS 38.212 or in any other appropriate manner.

The parameter $Q'_{ACK/CG-UCI} = Q'_{ACK}$ if both HARQ-ACK and CG-UCI are present on the same PUSCH with UL-SCH. Where $Q'_{ACK}$ may be the number of coded modulation symbols per layer for HARQ-ACK and CG-UCI transmitted on the PUSCH as defined in 3GPP TS 38.212 or in any other appropriate manner.

The parameter $Q'_{ACK/CG-UCI} = Q'_{CG-UCI}$ if CG-UCI is present on the same PUSCH with UL-SCH and without HARQ-ACK, where $Q'_{CG-UCI}$ is the number of coded modulation symbols per layer for CG-UCI transmitted on the PUSCH as defined in 3GPP TS 38.212 or in any other appropriate manner.

The parameter $M_{sc}^{UCI}(l)$ may be the number of resource elements that can be used for transmission of UCI in OFDM symbol $l$, for $l = 0, 1, 2, \ldots, N_{symb,all}^{PUSCH} - 1$ in the PUSCH transmission and $N_{symb,all}^{PUSCH}$ may be the total number of OFDM symbols of the PUSCH, including all OFDM symbols used for DMRS. For any OFDM symbol that carries DMRS of the PUSCH, $M_{sc}^{UCI}(l) = 0$. For any OFDM symbol that does not carry DMRS of the PUSCH, $M_{sc}^{UCI}(l) = M_{sc}^{PUSCH} - M_{sc}^{PT-RS}(l)$. In addition, the parameter $a$ may be configured by higher layer parameter *scaling*.

For CSI part 1 transmission on PUSCH not using repetition type B with UL-SCH, and if *numberOfSlotsTBoMS* is present in the resource allocation table and the value of *numberOfSlotsTBoMS* in the row indicated by the Time domain resource assignment field in DCI is larger than 1, the number of coded modulation symbols per layer for CSI part 1 transmission, denoted as $Q'_{CSI-part1}$, may be determined as follows:

$$Q'_{CSI-1} = \min\{f_1, f_2\}$$

Where, $f_1 = \left\lceil \frac{(O_{CSI-1} + L_{CSI-1}) \cdot \beta_{offset}^{PUSCH} \cdot \sum_{l=0}^{N_{symb,all}^{PUSCH}-1} M_{sc}^{UCI}(l)}{\frac{1}{N_s} \sum_{r=0}^{C_{UL-SCH}-1} K_r} \right\rceil$,

$$f_2 = \left\lceil \alpha \cdot \sum_{l=0}^{N_{symb,all}^{PUSCH}-1} M_{sc}^{UCI}(l) \right\rceil - Q'_{ACK/CG-UCI}$$

The parameter $N_S$ may be the value of *numberOfSlotsTBoMS* in the row indicated by the Time domain resource assignment field in DCI. The parameter $M_{sc}^{PT-RC}(l)$ may be the number of subcarriers in OFDM symbol *l* that carries PTRS, in the PUSCH transmission of TB processing over multiple slots in the slot with the CSI part 1 transmission. The parameter $M_{sc}^{UCI}(l)$ may be the number of resource elements that can be used for transmission of UCI in OFDM symbol *l*, for $l = 0,1,2,\ldots,N_{symb,all}^{PUSCH}-1$, in the PUSCH transmission of TB processing over multiple slots in the slot with the CSI part 1 transmission and $N_{symb,all}^{PUSCH}$ is the total number of OFDM symbols of the PUSCH in the slot, including all OFDM symbols used for DMRS. The other notations in the formula may be defined the same as for PUSCH not using repetition type B and if *numberOfSlotsTBoMS* is not present in the resource allocation table.

For CSI part 1 transmission on an actual repetition of a PUSCH with repetition Type B with UL-SCH, the number of coded modulation symbols per layer for CSI part 1 transmission, denoted as $Q'_{CSI-part1}$, may be determined as follows:

$$Q'_{CSI-1} = \min\{f_1, \ f(\alpha), \ f_2\}$$

Where, $f_1 = \left\lceil \dfrac{(O_{CSI-1}+L_{CSI-1}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL-SCH}-1} K_r} \right\rceil$,

$$f(\alpha) = \left\lceil \alpha \cdot \sum_{l=0}^{N_{symb,nominal}^{PUSCH}-1} M_{sc,nominal}^{UCI}(l) \right\rceil - Q'_{ACK/CG-UCI},$$

and

$$f_2 = \sum_{l=0}^{N_{symb,actual}^{PUSCH}-1} M_{sc,actual}^{UCI}(l) - Q'_{ACK/CG-UCI}$$

The parameter, $M_{sc,nominal}^{UCI}(l)$ may be the number of resource elements that can be used for transmission of UCI in OFDM symbol *l*, for $l = 0, 1, 2, \cdots, N_{symb,nominal}^{PUSCH}-1$, in the PUSCH transmission assuming a nominal repetition without segmentation, and $N_{symb,nominal}^{PUSCH}$ may be the total number of OFDM symbols in a nominal repetition of the PUSCH, including all OFDM symbols used for DMRS.

For any OFDM symbol that carries DMRS of the PUSCH assuming a nominal repetition without segmentation, $M_{sc,nominal}^{UCI}(l) = 0$. For any OFDM symbol that does not carry DMRS of the PUSCH assuming a nominal repetition without segmentation, $M_{sc,nominal}^{UCI}(l) = M_{sc}^{PUSCH} - M_{sc,nominal}^{PT-RS}(l)$ where $M_{sc,nominal}^{PT-RS}(l)$ is the number of subcarriers in OFDM symbol l that carries PTRS, in the PUSCH transmission assuming a nominal repetition without segmentation.

The parameter $M_{sc,actual}^{UCI}(l)$ may be the number of resource elements that can be used for transmission of UCI in OFDM symbol *l*, for $l = 0, 1, 2, \cdots, N_{symb,actual}^{PUSCH}-1$, in the actual repetition of the PUSCH transmission, and $N_{symb,actual}^{PUSCH}$ is the total number of OFDM symbols in the actual repetition of the PUSCH transmission, including all OFDM symbols used for DMRS. For any OFDM symbol that carries DMRS of the actual repetition of the PUSCH transmission, $M_{sc,actual}^{UCI}(l) = 0$ . For any OFDM symbol that does not carry DMRS of the actual repetition of the PUSCH transmission, $M_{sc,actual}^{UCI}(l) = M_{sc}^{PUSCH} - M_{sc,actual}^{PT-RS}(l)$ where $M_{sc,actual}^{PT-RS}(l)$ is the number of subcarriers in OFDM symbol *l* that carries PTRS, in the actual repetition of the PUSCH transmission. The other notations in the formula may be defined the same as for PUSCH not using repetition type B and if *numberOfSlotsTBoMS* is not present in the resource allocation table.

For CSI part 1 transmission on an actual repetition of a PUSCH with repetition Type B with UL-SCH, the number of coded modulation symbols per layer for CSI part 1 transmission, denoted as $Q'_{CSI-part1}$, may be determined as follows:

$$Q'_{CSI-1} = \min\{f_1, \quad f(\alpha), \quad f_2\}$$

Where, $\quad f_1 = \left\lceil \frac{(O_{CSI-1}+L_{CSI-1}) \cdot \beta_{offset}^{PUSCH} \cdot \sum_{l=0}^{N_{symb,nominal}^{PUSCH}-1} M_{sc,nominal}^{UCI}(l)}{\sum_{r=0}^{C_{UL-SCH}-1} K_r} \right\rceil$ ,

$$f(\alpha) = \left\lceil \alpha \cdot \sum_{l=0}^{N_{symb,nominal}^{PUSCH}-1} M_{sc,nominal}^{UCI}(l) \right\rceil - Q'_{ACK/CG-UCI},$$

and

$$f_2 = \sum_{l=0}^{N_{symb,actual}^{PUSCH}-1} M_{sc,actual}^{UCI}(l) - Q'_{ACK/CG-UCI}$$

The parameter $M_{sc,nominal}^{UCI}(l)$ may be the number of resource elements that can be used for transmission of UCI in OFDM symbol *l*, for $l = 0, 1, 2, \cdots, N_{symb,nominal}^{PUSCH} - 1$ , in the PUSCH transmission assuming a nominal repetition without segmentation, and $N_{symb,nominal}^{PUSCH}$ is the total number of OFDM symbols in a nominal repetition of the PUSCH, including all OFDM symbols used for DMRS.

For any OFDM symbol that carries DMRS of the PUSCH assuming a nominal repetition without segmentation, $M_{sc,nominal}^{UCI}(l) = 0$ . For any OFDM symbol that does not carry DMRS of the PUSCH assuming a nominal repetition without segmentation, $M_{sc,nominal}^{UCI}(l) = M_{sc}^{PUSCH} - M_{sc,nominal}^{PT-RS}(l)$ where $M_{sc,nominal}^{PT-RS}(l)$ is the number of subcarriers in OFDM symbol l that carries PTRS, in the PUSCH transmission assuming a nominal repetition without segmentation.

The parameter $M_{sc,actual}^{UCI}(l)$ may be the number of resource elements that can be used for transmission of UCI in OFDM symbol *l*, for $l = 0, 1, 2, \cdots, N_{symb,actual}^{PUSCH} - 1$ in the actual repetition of the PUSCH transmission, and $N_{symb,actual}^{PUSCH}$ is the total number of OFDM symbols in the actual repetition of the PUSCH transmission, including all OFDM symbols used for DMRS. For any OFDM symbol that carries DMRS of the actual repetition of the PUSCH transmission, $M_{sc,actual}^{UCI}(l) = 0$ . For any OFDM symbol that does not carry DMRS of the actual repetition of the PUSCH transmission, $M_{sc,actual}^{UCI}(l) = M_{sc}^{PUSCH} - M_{sc,actual}^{PT-RS}(l)$ where $M_{sc,actual}^{PT-RS}(l)$ is the number of subcarriers in OFDM symbol l that carries PTRS, in the actual repetition of the PUSCH transmission. The other notations in the formula are defined the same as for PUSCH not using repetition type B and if *numberOfSlotsTBoMS* is not present in the resource allocation table.

For CSI part 1 transmission on PUSCH without UL-SCH, the number of coded modulation symbols per layer for CSI part 1 transmission, denoted as $Q'_{CSI-part1}$, may be determined as follows:

If there is CSI part 2 to be transmitted on the PUSCH, $Q'_{\text{CSI-1}} = \min\{f_1, f_2\}$, where

$$f_1 = \left\lceil \frac{(O_{\text{CSI-1}} + L_{\text{CSI-1}}) \cdot \beta^{\text{PUSCH}}_{\text{offset}}}{R \cdot Q_m} \right\rceil \text{ and } f_2 = \sum_{l=0}^{N^{\text{PUSCH}}_{\text{symb,all}} - 1} M^{\text{UCI}}_{\text{sc}}(l) - Q'_{\text{ACK}}, \text{ else } Q'_{\text{CSI-1}} = f_2.$$

The parameter $O_{\text{CSI-1}}$ may be the number of bits for CSI part 1. If $O_{\text{CSI-1}} \geq 360$, $L_{\text{CSI-1}} = 11$, otherwise $L_{\text{CSI-1}}$ is the number of CRC bits for CSI part 1 determined according to 3GPP TS 38.212 or in any other appropriate manner.

Here, $\beta^{\text{PUSCH}}_{\text{offset}} = \beta^{\text{CSI-part1}}_{\text{offset}}$. The parameter $M^{\text{PUSCH}}_{\text{sc}}$ may be the scheduled bandwidth of the PUSCH transmission, expressed as a number of subcarriers. The parameter $M^{\text{PT-RS}}_{\text{sc}}(l)$ may be the number of subcarriers in OFDM symbol I that carries PTRS, in the PUSCH transmission. The parameter $Q'_{\text{ACK}}$ may be the number of coded modulation symbols per layer for HARQ-ACK transmitted on the PUSCH if number of HARQ-ACK information bits is more than 2, and $Q'_{\text{ACK}} = \sum_{l=0}^{N^{\text{PUSCH}}_{\text{symb,all}} - 1} \bar{M}^{\text{ACK}}_{\text{sc, rvd}}(l)$ if the number of HARQ-ACK information bits is no more than 2 bits. Where $\bar{M}^{\text{ACK}}_{\text{sc, rvd}}(l)$ is the number of reserved resource elements for potential HARQ-ACK transmission in OFDM symbol *l*, for $l = 0, 1, 2, \ldots, N^{\text{PUSCH}}_{\text{symb,all}} - 1$, in the PUSCH transmission, as defined in 3GPP TS 38.212 or in any other appropriate manner.

The parameter $M^{\text{UCI}}_{\text{sc}}(l)$ may be the number of resource elements that can be used for transmission of UCI in OFDM symbol *l*, for $l = 0, 1, 2, \ldots, N^{\text{PUSCH}}_{\text{symb,all}} - 1$, in the PUSCH transmission and $N^{\text{PUSCH}}_{\text{symb,all}}$ is the total number of OFDM symbols of the PUSCH, including all OFDM symbols used for DMRS. For any OFDM symbol that carries DMRS of the PUSCH, $M^{\text{UCI}}_{\text{sc}}(l) = 0$. For any OFDM symbol that does not carry DMRS of the PUSCH, $M^{\text{UCI}}_{\text{sc}}(l) = M^{\text{PUSCH}}_{\text{sc}} - M^{\text{PT-RS}}_{\text{sc}}(l)$.

In addition, the parameter *R* may be the code rate of the PUSCH, determined according to TS 38.214 or in any other appropriate manner. The parameter $Q_m$ is the modulation order of the PUSCH and the input bit sequence to rate matching is $d_{r0}, d_{r1}, d_{r2}, d_{r3}, \ldots, d_{r(N_r-1)}$ where *r* is the code block number, and $N_r$ is the number of coded bits in code block number *r*.

Rate matching may be performed according to 3GPP TS 38.212 by setting $I_{\text{BIL}} = 1$ and the rate matching output sequence length to $E_r = \lfloor E_{\text{UCI}} / C_{\text{UCI}} \rfloor$, where $C_{\text{UCI}}$ is the number of code blocks for UCI determined according to 3GPP TS 38.212, $N_L$ is the number of transmission layers of the PUSCH, $Q_m$ is the modulation order of the PUSCH and $E_{\text{UCI}} = N_L \cdot Q'_{\text{CSI,1}} \cdot Q_m$. The output bit sequence after rate matching may be denoted as $f_{r0}, f_{r1}, f_{r2}, \ldots, f_{r(E_r-1)}$ where $E_r$ is the length of rate matching output sequence in code block number *r*.

## Performing HARQ-ACK Omission for a PUCCH Transmission

The embodiments also introduce techniques for omitting UCI that is to be transmitted on the PUCCH. These techniques are described with regard to scenarios in which HARQ-ACK omission has already been triggered for a subsequent PUCCH transmission.

The following embodiments are described with regard to various different types of HARQ-ACK feedback. From the perspective of the UE 110, different types of HARQ-ACK feedback may be further characterized as HP and LP (e.g., HP deferred SPS HARQ-ACK, LP SPS deferred HARQ-ACK, etc.). Within the context of UCI multiplexing, the UE 110 may be configured to handle HP and LP HARQ-ACK feedback in a particular manner. However, the manner in which the UE 110 characterizes HARQ-ACK feedback as HP or LP is beyond the scope of the embodiments. The embodiments apply to scenarios where the UE 110 has already characterized the HARQ-ACK feedback as LP or HP in any appropriate manner.

In addition, reference is made to initial HARQ-ACK feedback. Throughout this description, initial HARQ-ACK feedback may refer to HARQ-ACK feedback that has is being considered for transmission for the first time. Reference is also made to HARQ-ACK feedback for retransmission. Throughout this description, HARQ-ACK feedback for retransmission may refer to HARQ-ACK feedback that was previously transmitted by the UE 110. Reference may also be made to deferred HARQ-ACK feedback. Throughout this description, deferred HARQ-ACK feedback may refer to feedback that was considered for transmission at a previous time by the UE 110 but a transmission of the HARQ-ACK feedback was not performed.

Prior to discussing the exemplary techniques, a brief description is provided below which may enable the UE 110 to derive the parameters $E_{UCI}$ and $E_{tot}$. Those skilled in the art will understand that these parameters relate to rate matching. In some of the exemplary embodiments provided below, HARQ-ACK omission rules may be defined based on these parameters.

For rate matching, $E_{UCI}$ may represent the number of modulation symbols for the HP UCIs, given by:

$$E_{UCI} = min(E_{tot}, \lceil (O^{ACK-HP} + L)/R_{UCI}^{max-HP}/Q_m \rceil \cdot Q_m)$$

For rate matching, $E_{UCI}$ may represent the number of modulation symbols for the LP UCIs, given by:

$$E_{UCI} = E_{tot} - min(E_{tot}, \lceil (O^{ACK-HP} + L)/R_{UCI}^{max-HP}/Q_m \rceil \cdot Q_m)$$

Here, L may represent the CRC length due to the UCI payload size. In some embodiments, depending on the payload size, L may be equal to zero. For HP PUCCH resources, the maximum coding rates for HP UCIs and LP UCIs may be respectively configured using $R_{UCI}^{max-HP}$ and $R_{UCI}^{max-LP}$. In addition, $E_{tot}$ may represent the total number of modulation symbols for UCIs and $Q_m$ may represent the modulation order.

Some of the exemplary embodiments introduce omission rules for when the joint operation of SPS HARQ deferral and inter-Layer 1 (L1) priority multiplexing may supported be supported at the UE 110. When multiplexing of HP scheduling request (SR) for inter-L1 priority multiplexing is supported, HP UCI for a subsequent PUCCH transmission may consist of one or more of the following types of UCI: HP SR, HP initial HARQ-ACK and HP deferred SPS HARQ-ACK.

For multiplexing HP UCI comprising HP deferred SPS HARQ-ACK, the following rules may be utilized:

$$\lceil (O^{ACK-HP} + L)/R_{UCI}^{max-HP}/Q_m \rceil \cdot Q_m > E_{tot},$$

or

$$\lceil (O^{ACK-HP} + O^{SR-HP} + L)/R_{UCI}^{max-HP}/Q_m \rceil \cdot Q_m > E_{tot},$$

Where $O^{ACK-HP}$ includes HP deferred SPS HARQ-ACK, $O^{SR-HP}$ is the UCI payload size for HP SR. Then the UCI bits due to deferred SPS HARQ-ACK may be omitted as shown in the following examples. In one example, when multiplexing HP initial HARQ-ACK and HP deferred SPS HARQ-ACK, the HP deferred SPS HARQ-ACK may be omitted leaving the HP initial HARQ-ACK. In another example, when multiplexing HP SR and HP deferred SPS HARQ-ACK, the HP deferred SPS HARQ-ACK may be omitted leaving the HP SR. In a further example, when multiplexing HP SR, HP initial HARQ-ACK and HP deferred SPS HARQ-ACK, the HP deferred SPS HARQ-ACK may be omitted leaving HP SR and HP initial HARQ-ACK.

In other embodiments, the omission rule may be defined as HP initial HARQ-ACK prioritized over HP deferred SPS HARQ-ACK prioritized over HP SR. Thus, the SR may be omitted first. Then the UE 110 may determine whether the remaining UCIs meet the maximum coding rate requirement. In this example, if the coding rate requirement is not met, then the HP deferred SPS HARQ-ACK may be omitted as well.

The embodiments introduce omission rules for when the joint operation of HARQ retransmission with Type 1/Type 2 HARQ-ACK codebook and inter-L1 priority multiplexing may be supported by the UE 110. When these two features are supported, the HP UCIs consist of one or more of the following types of UCI: HP SR, HP initial HARQ-ACK and HP HARQ-ACK for retransmission.

The UCI payload size for a subsequent PUCCH transmission may exceed the capacity for HP UCIs. Accordingly, the following rules may be utilized:

$$\lceil (O^{ACK-HP} + L)/R_{UCI}^{max-HP}/Q_m \rceil \cdot Q_m > E_{tot},$$

or

$$\lceil (O^{ACK-HP} + O^{SR-HP} + L)/R_{UCI}^{max-HP}/Q_m \rceil \cdot Q_m > E_{tot,}$$

Where $O^{ACK-HP}$ includes HP HARQ-ACK for retransmission, $O^{SR-HP}$ is the UCI payload size for HP SR. Then the UCI bits due to HARQ-ACK for retransmission are omitted as shown in the following examples. In one example, when multiplexing HP Initial HARQ-ACK and HP HARQ-ACK for retransmission, the HP HARQ-ACK for retransmission may be omitted leaving HP initial HARQ-ACK. In another example, when multiplexing HP SR and HP HARQ-ACK for retransmission, the HP HARQ-ACK for retransmission may be omitted leaving the HP SR. When multiplexing HP SR, HP initial HARQ-ACK and HP HARQ-ACK for retransmission, the HP HARQ-ACK for transmission may be omitting leaving the HP SR and HP Initial HARQ-ACK.

In other embodiments, the omission rule may place the lowest priority on the HP Initial HARQ-ACK, the second lowest priority on the HP HARQ-ACK for retransmission and the highest priority on the HP SR. For example, when multiplexing HP initial HARQ-ACK and HP HARQ-ACK for retransmission, the HP initial HARQ-ACK may be omitted leaving the HP HARQ-ACK for retransmission. In another example, when multiplexing HP SR and HP HARQ-ACK for retransmission, the HP HARQ-ACK for retransmission may be omitted leaving the HP SR. In a further example, when multiplexing HP SR, HP initial HARQ-ACK and HP HARQ-ACK for retransmission, the HP initial HARQ-ACK may be omitted leaving the HP SR and the HP HARQ-ACK for retransmission.

In some embodiments, the choice of omitting the HP HARQ-ACK for retransmission or the HP initial HARQ-ACK may be determined by the UE 110 through factors such as, but not limited to, whether the HP initial HARQ-ACK is SPS HARQ-ACK and/or the timing of the PDCCH with a DCI triggering the initial HARQ-ACK and the PDCCH with a DCI triggering the HARQ-ACK for retransmission. In one example, between a SPS HARQ-ACK and a DCI triggered HARQ-ACK retransmission, the HARQ-ACK transmission due to a DCI triggering is prioritized. In another example, between two DCI triggered HARQ-ACK books, the later triggered one may be prioritized.

For LP UCIs over PUCCH, similar considerations may be taken. For example, after omission rules are applied to the HP UCIs as shown in the examples above, the following omission rules may be utilized:

$$\lceil (O^{ACK-LP} + L_{LP})/R_{UCI}^{max-LP}/Q_m \rceil \cdot Q_m > E_{UCI},$$

or

$$\lceil (O^{ACK-LP} + O^{SR-LP} + L_{LP})/R_{UCI}^{max-LP}/Q_m \rceil \cdot Q_m > E_{UCI,}$$

Here, $O^{ACK-LP}$ includes LP deferred SPS HARQ-ACK, $O^{SR-LP}$ is the UCI payload size for LP SR, $L_{LP}$ may represent the CRC length due to the LP UCI payload size (which may be zero depending on the payload size). In some scenarios, the UCI bits due to deferred SPS HARQ ACK may be omitted. For example, when multiplexing LP initial HARQ-ACK and LP deferred SPS HARQ-ACK, the LP deferred SPS HARQ-ACK may be omitted leaving the LP initial HARQ-ACK. In another example, when multiplexing LP SR and LP deferred SPS HARQ-ACK, the LP deferred SPS HARQ-ACK may be omitted leaving the LP SR. In a further example, when multiplexing LP SR, LP initial HARQ-ACK and LP deferred SPS HARQ-ACK, the LP deferred SPS HARQ-ACK may be omitted leaving the LP SR and LP initial HARQ-ACK.

In other embodiments, the HARQ-ACK may be prioritized over the SR. For example, LP initial HARQ-ACK may be prioritized over LP deferred SPS HARQ-ACK which may be prioritized over LP SR. Thus, the LP SR may be omitted first to see whether the remaining UCIs meet the maximum coding rate requirement. If the remaining UCIs do not meet the maximum coding rate requirement, the LP deferred SPS HARQ-ACK may be omitted leaving the LP initial HARQ-ACK.

When joint operation of HARQ retransmission with Type 1/Type 2 HARQ-ACK codebook and inter-L1 priority multiplexing is supported by the UE 110, the UCI payload size including initial HARQ-ACK, HARQ-ACK for retransmission, and SR may exceed the capacity for LP UCIs, given by:

$$\lceil (O^{ACK-LP} + L_{LP})/R_{UCI}^{max-LP}/Q_m \rceil \cdot Q_m > E_{UCI},$$

or

$$\lceil (O^{ACK-LP} + O^{SR-LP} + L_{LP})/R_{UCI}^{max-LP}/Q_m \rceil \cdot Q_m > E_{tot,}$$

Here, $O^{ACK-LP}$ includes LP HARQ-ACK for retransmission, $O^{SR-LP}$ is the UCI payload size for LP SR, $L_{LP}$ may represent the CRC length due to the LP UCI payload size (which may be zero depending on the payload size. The UCI bits due to HARQ-ACK for retransmission may be omitted in accordance with the following examples. In one example, when multiplexing LP initial HARQ-ACK and LP HARQ-ACK for retransmission, the LP HARQ-ACK for retransmission may be omitted leaving the LP initial HARQ-ACK. In another example, when multiplexing LP SR, and HP HARQ-ACK for retransmission, the HP HARQ-ACK for retransmission may be omitted leaving the LP SR. In a further example, when multiplexing LP SR, LP initial HARQ-ACK and LP HARQ-ACK for retransmission, the HP HARQ-ACK for retransmission may be omitted leaving the LP SR and the LP initial HARQ-ACK.

In other embodiments, the LP initial HARQ-ACK may be assigned the lowest priority. For example, when multiplexing LP initial HARQ-ACK and LP HARQ-ACK for retransmission, the LP initial HARQ-ACK may be omitted leaving the LP HARQ-ACK for retransmission. In another example, when multiplexing LP SR and LP HARQ-ACK for retransmission, the LP HARQ-ACK for retransmission may be omitted leaving the LP SR. In a further example, LP SR, LP initial HARQ-ACK and LP HARQ-ACK for retransmission, the LP initial HARQ-ACK may be omitted leaving the LP SR and the LP HARQ-ACK for retransmission.

The UE 110 may determine whether to omit LP HARQ-ACK for retransmission and LP Initial HARQ-ACK using factors such as, but not limited to, whether the initial HARQ-ACK is SPS HARQ-ACK and/or the timing of the PDCCH with a DCI triggering the Initial HARQ-ACK and the PDCCH with a DCI triggering the HARQ-ACK for retransmission. In one example, between a SPS HARQ-ACK and a DCI triggered HARQ-ACK for retransmission, the HARQ-ACK transmission due to a DCI triggering is prioritized. In another example, between two DCI triggered HARQ-ACK books, the latter triggered one is prioritized.

Those skilled in the art will understand that the above-described exemplary embodiments may be implemented in any suitable software or hardware configuration or combination thereof. An exemplary hardware platform for implementing the exemplary embodiments may include, for example, an Intel x86 based platform with compatible operating system, a Windows OS, a Mac platform and MAC OS, a mobile device having an operating system such as iOS, Android, etc. The exemplary embodiments of the above described method may be embodied as a program containing lines of code stored on a non-transitory computer readable storage medium that, when compiled, may be executed on a processor or microprocessor.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

**Claims**

1. A processor (205) of a user equipment, UE (110), configured to perform operations, the processor (205) comprising:

   processing different types of uplink control information, UCI, configured for a physical uplink control channel, PUCCH, transmission;
   omitting one or more instances of the UCI for the PUCCH transmission, wherein the omitting is performed based on an omission rule; and
   performing the PUCCH transmission;
   wherein with a simultaneous configuration of type 1 HARQ-ACK codebook or type 2 HARQ-ACK codebook and inter-L1 priority multiplexing:

   deriving a parameter representing a total number of modulation symbols for the different types of UCI configured for the PUCCH transmission, wherein the omission rule is associated with high priority, HP, UCI and is based on a comparison to the parameter; and
   **characterized in that** the omission rule is configured to prioritize HP initial HARQ-ACK and HP scheduling request over HP HARQ-ACK for retransmission.

2. The processor (205) of claim 1 with a simultaneous configuration of semi-persistent scheduling, SPS, HARQ deferral and inter-layer 1, L1, priority multiplexing, the operations further comprising:
   deriving a parameter representing a total number of modulation symbols for the different types of UCI configured for the PUCCH transmission, wherein the omission rule is associated with HP UCI and is based on a comparison to the parameter.

3. The processor (205) of claim 2, wherein the omission rule is configured to prioritize HP initial HARQ-ACK and HP scheduling request over HP deferred SPS HARQ-ACK.

4. The processor (205) of claim 2, wherein the omission rule is configured to prioritize HP deferred SPS HARQ-ACK and HP initial HARQ-ACK over HP scheduling request.

5. The processor (205) of claim 2, the operations further comprising:
omitting, after applying the omission rule associated with HP UCI, one or more instances of low priority, LP, UCI based on a LP omission rule.

6. The processor (205) of claim 5, wherein the LP omission rule is configured to prioritize LP initial HARQ-ACK and LP scheduling request over LP deferred SPS HARQ-ACK.

7. The processor (205) of claim 5, wherein the LP omission rule is configured to prioritize LP deferred SPS HARQ-ACK and LP initial HARQ-ACK over LP scheduling request.

8. The processor (205) of claim 1, the operations further comprising:
omitting, after applying the omission rule associated with HP UCI, one or more instances of low priority, LP, UCI based on a LP omission rule.

9. The processor (205) of claim 8, wherein the LP omission rule is configured to prioritize LP initial HARQ-ACK and LP scheduling request over LP deferred SPS HARQ-ACK.

10. The processor (205) of claim 8, wherein the LP omission rule is configured to prioritize LP deferred SPS HARQ-ACK and LP initial HARQ-ACK over LP scheduling request.


**Patentansprüche**

1. Prozessor (205) einer Benutzereinrichtung, UE (110), der konfiguriert ist, um Vorgänge durchzuführen, der Prozessor (205) umfassend:

   Verarbeiten verschiedener Arten von Uplink-Steuerinformationen, UCI, die für eine Übertragung eines physischen Uplink-Steuerkanals, PUCCH, konfiguriert sind;
   Auslassen einer oder mehrerer Instanzen der UCI für die PUCCH-Übertragung, wobei das Auslassen basierend auf einer Auslassungsregel durchgeführt wird; und
   Durchführen der PUCCH-Übertragung;
   wobei bei einer gleichzeitigen Konfiguration von HARQ-ACK-Codebuch Typ 1 oder HARQ-ACK-Codebuch Typ 2 und Inter-L1-Prioritätsmultiplexing:

   Ableiten eines Parameters, der eine Gesamtzahl von Modulationssymbolen für die verschiedenen Arten von UCI darstellt, die für die PUCCH-Übertragung konfiguriert sind, wobei die Auslassungsregel mit UCI hoher Priorität, HP, verknüpft ist und auf einem Vergleich mit dem Parameter basiert; und
   **dadurch gekennzeichnet, dass** die Auslassungsregel konfiguriert ist, um bei der erneuten Übertragung die anfängliche HP-HARQ-ACK und die HP-Planungsanforderung gegenüber der HP-HARQ-ACK zu priorisieren.

2. Prozessor (205) nach Anspruch 1 mit einer gleichzeitigen Konfiguration von semipersistenter Planung-HARQ-Verzögerung, SPS-HARQ-Verzögerung, und Inter-Layer 1-Prioritätsmultiplexing, L1-Prioritätsmultiplexing, die Vorgänge ferner umfassend:
Ableiten eines Parameters, der eine Gesamtzahl von Modulationssymbolen für die verschiedenen Arten von UCI darstellt, die für die PUCCH-Übertragung konfiguriert sind, wobei die Auslassungsregel mit HP-UCI verknüpft ist und auf einem Vergleich mit dem Parameter basiert.

3. Prozessor (205) nach Anspruch 2, wobei die Auslassungsregel konfiguriert ist, um anfängliche HP-HARQ-ACK und HP-Planungsanforderung gegenüber verzögerter HP-SPS-HARQ-ACK zu priorisieren.

4. Prozessor (205) nach Anspruch 2, wobei die Auslassungsregel konfiguriert ist, um verzögerte HP-SPS-HARQ-ACK und anfängliche HP-HARQ-ACK gegenüber HP-Planungsanforderung zu priorisieren.

**5.** Prozessor (205) nach Anspruch 2, die Vorgänge ferner umfassend:
Auslassen, nach einer Anwendung der Auslassungsregel, die mit HP UCI verknüpft ist, einer oder mehrerer Instanzen von UCI mit niedriger Priorität, LP, basierend auf einer LPAuslassungsregel.

**6.** Prozessor (205) nach Anspruch 5, wobei die LP-Auslassungsregel konfiguriert ist, um anfängliche LP-HARQ-ACK und LP-Planungsanforderung gegenüber verzögerter LP-SPS-HARQ-ACK zu priorisieren.

**7.** Prozessor (205) nach Anspruch 5, wobei die LP-Auslassungsregel konfiguriert ist, um verzögerte LP-SPS-HARQ-ACK und anfängliche LP-HARQ-ACK gegenüber LP-Planungsanforderung zu priorisieren.

**8.** Prozessor (205) nach Anspruch 1, die Vorgänge ferner umfassend:
Auslassen, nach einer Anwendung der Auslassungsregel, die mit HP UCI verknüpft ist, einer oder mehrerer Instanzen von UCI mit niedriger Priorität, LP, basierend auf einer LP-Auslassungsregel.

**9.** Prozessor (205) nach Anspruch 8, wobei die LP-Auslassungsregel konfiguriert ist, um anfängliche LP-HARQ-ACK und LP-Planungsanforderung gegenüber verzögerter LP-SPS-HARQ-ACK zu priorisieren.

**10.** Prozessor (205) nach Anspruch 8, wobei die LP-Auslassungsregel konfiguriert ist, um verzögerte LP-SPS-HARQ-ACK und anfängliche LP-HARQ-ACK gegenüber LP-Planungsanforderung zu priorisieren.

## Revendications

**1.** Processeur (205) d'un équipement utilisateur, UE (110), configuré pour mettre en œuvre des opérations, le processeur (205) comprenant :

le traitement de différents types d'informations de commande de liaison montante, UCI, configurées pour une transmission de canal de commande de liaison montante physique, PUCCH ;
l'omission d'une ou plusieurs instances des UCI pour la transmission PUCCH, dans lequel l'omission est mise en œuvre sur la base d'une règle d'omission ; et
la mise en œuvre de la transmission PUCCH ;
dans lequel avec une configuration simultanée de livre de codes HARQ-ACK de type 1 ou de livre de codes HARQ-ACK de type 2 et un multiplexage de priorité inter-L1 :

la dérivation d'un paramètre représentant un nombre total de symboles de modulation pour les différents types d'UCI configurés pour la transmission PUCCH, dans lequel la règle d'omission est associée à des UCI à haute priorité, HP, et est basée sur une comparaison au paramètre ; et
**caractérisé en ce que** la règle d'omission est configurée pour classer par ordre de priorité un HARQ-ACK initial HP et une demande de planification HP par rapport à HARQ-ACK HP pour retransmission.

**2.** Processeur (205) selon la revendication 1 avec une configuration simultanée de planification semi-persistante, SPS, un report de HARQ et un multiplexage de priorité inter-couche 1, L1, les opérations comprenant en outre :
la dérivation d'un paramètre représentant un nombre total de symboles de modulation pour les différents types d'UCI configurés pour la transmission PUCCH, dans lequel la règle d'omission est associée à des UCI HP, et est basée sur une comparaison au paramètre.

**3.** Processeur (205) selon la revendication 2, dans lequel la règle d'omission est configurée pour classer par ordre de priorité un HARQ-ACK initial HP et une demande de planification HP par rapport à HARQ-ACK à SPS reporté HP.

**4.** Processeur (205) selon la revendication 2, dans lequel la règle d'omission est configurée pour classer par ordre de priorité un HARQ-ACK à SPS reporté HP et HARQ-ACK initial HP par rapport à une demande de planification HP.

**5.** Processeur (205) selon la revendication 2, les opérations comprenant en outre :
l'omission, après application de la règle d'omission associée à des UCI HP, d'une ou plusieurs instances d'UCI à basse priorité, LP, sur la base d'une règle d'omission LP.

**6.** Processeur (205) selon la revendication 5, dans lequel la règle d'omission LP est configurée pour classer par ordre de priorité un HARQ-ACK initial LP et une demande de planification LP par rapport à HARQ-ACK à SPS reporté LP.

**7.** Processeur (205) selon la revendication 5, dans lequel la règle d'omission LP est configurée pour classer par ordre de priorité un HARQ-ACK à SPS reporté LP et HARQ-ACK initial LP par rapport à une demande de planification LP.

**8.** Processeur (205) selon la revendication 1, les opérations comprenant en outre :
l'omission, après application de la règle d'omission associée à des UCI HP, d'une ou plusieurs instances d'UCI à basse priorité, LP, sur la base d'une règle d'omission LP.

**9.** Processeur (205) selon la revendication 8, dans lequel la règle d'omission LP est configurée pour classer par ordre de priorité un HARQ-ACK initial LP et une demande de planification LP par rapport à HARQ-ACK à SPS reporté LP.

**10.** Processeur (205) selon la revendication 8, dans lequel la règle d'omission LP est configurée pour classer par ordre de priorité un HARQ-ACK à SPS reporté LP et HARQ-ACK initial LP par rapport à une demande de planification LP.

UE
110

gNB
120A

5G NR
RAN 120

Cellular Core Network 130

IMS
150

Internet 140

Network Services
Backbone 160

**Fig. 1**

EP 4 441 941 B1

UE 110

Processor 205

| HARQ Feedback Engine 235 | UCI Multiplexing Engine 240 |

Memory Arrangement 210

| Display Device 215 | Transceiver 225 |

| I/O Device 220 | Other Components 230 |

**Fig. 2**

**Base Station 300**

Processor 305

HARQ Engine 330

UCI Multiplexing Engine 335

Memory Arrangement 310

Transceiver 320

I/O Device 315

Other Components 325

**Fig. 3**

EP 4 441 941 B1

Scenario 400

Fig. 4

Scenario 500

| | | | | |
|---|---|---|---|---|
| DL Slot 520 | DL Slot 522 | DL Slot 524 | DL Slot 526 | PUCCH Slot 528 |

CC 510 Frequency 511

| | | | | |
|---|---|---|---|---|
| DL Slot 560 | DL Slot 562 | PUCCH Slot 564 | DL Slot 566 | DL Slot 568 |

CC 550 Frequency 551

Time Domain 502

## Fig. 5

```
                              ┌─────────┐
                              │  Start  │
                              └────┬────┘
                                   │
                                   ▼
        ┌──────────────────────────────────────────────────────────────┐
  605 ──│  Identify SPS HARQ-ACK feedback that is to be deferred to a future occasion  │
        └──────────────────────────────┬───────────────────────────────┘
                                        │
                                        ▼
        ┌──────────────────────────────────────────────────────────────┐
  610 ──│      Determine a next PUCCH slot on the cell for PUCCH transmission       │◄──────┐
        └──────────────────────────────┬───────────────────────────────┘       │
                                        │                                       │
                                        ▼                                       │
                 615                   ╱╲                                       │
                  ╲            ╱               ╲                                 │
                   ╲      ╱       Is the next       ╲                            │
                    ╲  ╱      PUCCH slot on the cell for  ╲          No          │
                     ╱    PUCCH transmission the target PUCCH slot for  ╲────────┘
                     ╲       the deferred SPS HARQ-ACK feedback ?     ╱
                      ╲                                           ╱
                       ╲                                       ╱
                        ╲                                   ╱
                         ╲              ╲               ╱
                                         ▼ Yes
        ┌──────────────────────────────────────────────────────────────┐
  620 ──│  Transmit the deferred SPS HARQ-ACK feedback during the target PUCCH slot  │
        └──────────────────────────────┬───────────────────────────────┘
                                        │
                                        ▼
                              ┌─────────┐
                              │   End   │
                              └─────────┘
```

**Fig. 6**

PCell | Slot n | Slot n+1

Alternative Cell | PUCCH

Dynamically
Indicated

Scenario 710

PCell | Slot m

Alternative Cell | PUCCH-1 | PUCCH-2

Dynamically
Indicated

Scenario 750

Fig. 7

Fig. 8

Priority Reporting Levels

| | CSI Report 1 | CSI Report 2 | CSI Report3 |
|---|---|---|---|
| | Group 0 | Group 0 | Group 0 |
| | Group 1 | Group 1 | Group 1 |
| | Group 2 | Group 2 | Group 2 |

Priority level 0

Priority level 1

Priority level 2

Priority level 3

Priority level 4

Priority level 2N-1

Priority level 2N

Fig. 9

EP 4 441 941 B1

Table 1000

| M | 1005<br>Bits = 1+1+4 | 1010<br>Bits = 1+1+L | 1015<br>Bits = ceil(log2(1+2*M)) |
|---|---|---|---|
| 1 | 6 | 2 | 2 |
| 2 | 6 | 3 | 3 |
| 3 | 6 | 4 | 3 |
| 4 | 6 | 4 | 4 |
| 5 | 6 | 5 | 4 |
| 6 | 6 | 5 | 4 |
| 7 | 6 | 5 | 4 |
| 8 | 6 | 5 | 5 |
| 9 | 6 | 6 | 5 |
| 10 | 6 | 6 | 5 |
| 11 | 6 | 6 | 5 |
| 12 | 6 | 6 | 5 |
| 13 | 6 | 6 | 5 |
| 14 | 6 | 6 | 5 |
| 15 | 6 | 6 | 5 |
| 16 | 6 | 6 | 6 |

**Fig. 10**